Europäisches Patentamt

European Patent Office

Office européen des brevets

(19)

(11) Veröffentlichungsnummer: **0 060 527**
**B1**

(12) # EUROPÄISCHE PATENTSCHRIFT

(45) Veröffentlichungstag der Patentschrift:
19.06.85

(51) Int. Cl.⁴: **H 05 C 1/00,** A 22 B 3/06

(21) Anmeldenummer: **82101973.4**

(22) Anmeldetag: **11.03.82**

(54) **Verfahren und Vorrichtung zur elektrischen Betäubung von Schlachttieren.**

(30) Priorität: **13.03.81 DE 3109746**

(43) Veröffentlichungstag der Anmeldung:
**22.09.82 Patentblatt 82/38**

(45) Bekanntmachung des Hinweises auf die Patenterteilung:
**19.06.85 Patentblatt 85/25**

(84) Benannte Vertragsstaaten:
**AT BE CH FR GB IT LI NL SE**

(56) Entgegenhaltungen:
**DE - A - 2 135 900**
**DE - A - 2 329 983**
**GB - A - 1 452 887**

(73) Patentinhaber: **BANSS KG Maschinenfabrik,
Industriestrasse, D-3560 Biedenkopf (DE)**

(72) Erfinder: **Funk, Gerhard, Rembrandtweg 8,
D-7996 Meckenbeuren (DE)**

(74) Vertreter: **Kador . Klunker . Schmitt-Nilson . Hirsch,
Corneliusstrasse 15, D-8000 München 5 (DE)**

**0 060 527**

Beschreibung

Die Erfindung betrifft ein Verfahren zur elektrischen Betäubung von Schlachttieren, insbesondere Schweinen, bei dem der Tierkörper über Betäubungselektroden einer sich innerhalb der Spannungsbeaufschlagungszeit von einem Anfangswert über einen Höchstwert zu einem Endwert ändernden Betäubungsspannung ausgesetzt wird, sowie eine entsprechende Vorrichtung.

Bei der elektrischen Betäubung werden die zu betäubenden Schlachttiere in Berührung mit Betäubungselektroden gebracht, die entweder von einer Bedienungsperson in Form einer Betäubungsgabel oder Betäubungszange an das Tier angesetzt werden oder die im Förderweg eines Betäubungsförderers angeordnet sind und während der Förderbewegung des jeweils zu betäubenden Tieres mit diesem in Berührung kommen. Ein Betäubungsförderer mit Betäubungselektroden, die auf einem mit dem zu betäubenden Schlachttier mit bewegbaren Schlitten angeordnet sind, mit den Augenbereichen der geförderten Tiere in Berührung kommen und infolge der Förderbewegung des Tieres von einer Ruhelage aus verschwenkt werden, ist in der eigenen deutschen Patentanmeldung P 3 029 037.0 beschrieben.

Aus der DE-PS 1 507 930 ist eine Vorrichtung zur elektrischen Tierbetäubung bekannt, die das zu betäubende Tier einer stufenförmigen Betäubungsspannung aussetzt, wobei der Betäubungsvorgang für etwa eine Zehntelsekunde mit einer Spannung von 100 bis 140 V eingeleitet und das Tier danach einer gleichbleibenden Spannung von 70 bis 80 V ausgesetzt wird, wobei der Betäubungsvorgang nach 2 bis 4 Sekunden in Abhängigkeit von der bei vorstehendem Exitus auftretenden Tierwiderstandserhöhung beendet wird. Mit der stufenförmigen Betäubungsspannung soll eine augenblickliche und praktisch völlig schmerzfreie Betäubung gewährleistet, jedoch anschließend die Lösung des anfänglichen Krampfzustandes bewirkt werden, so daß die Tötung und das Ausbluten des Tieres erleichtert werden.

Wie auf S. 97 der Dissertation »Elektrische Bedwelming van Slachtvarkens« von R. Hoenderken zusammenfassend dargestellt ist, genügt eine Betäubungsspannung von 180 Volt nicht, um eine augenblickliche effektive Betäubung zu garantieren, sondern es sind Betäubungsspannungen von mindestens 300 Volt erforderlich. Diese auf Untersuchungen basierende Erkenntnis bedeuted aber, daß auch die stufenförmige Betäubungsspannung gemäß DE-PS 1 507 930 eine effektive Betäubung nicht garantiert. Andererseits wurde aber gemäß dieser DE-PS 1 507 930 festgestellt, daß Betäubungsspannungen über 300 Volt zu einem Krampfzustand des betäubten Tieres führen, der die Tötung und das Ausbluten erschwert. Hinzu kommt, daß bei einer Betäubung mit solchen Spannungen, die eine effektive Betäubung gewährleisten, schockartige Verkrampfungen auftreten, die einerseits zu Knochenbrüchen und andererseits zu Muskelrissen und damit verbundenen Blutgefäßverletzungen führen können. Diese sind als Schlachtschäden anzusehen und beeinträchtigen die Qualität des Fleisches des Schlachttieres.

Aus der DE-OS 1 757 231 ist eine Vorrichtung zum elektrischen Betäuben von Schlachttieren bekannt, bei dem die zu betäubenden Tiere zunächst für eine unbestimmte Zeit eine Beruhigungsspannung zugeführt bekommen und diese Spannung dann für den eigentlichen Betäubungsvorgang innerhalb einer Zeitdauer von einer halben bis eine Sekunde allmählich auf einen Höchstwert von 170 V erhöht, dieser Höchstwert während eineinhalb Sekunden beibehalten und danach die Betäubungsspannung innerhalb eines Zeitraums von einer Sekunde allmählich auf einen Spannungsendwert von 90 V verringert wird. Durch die allmählich ansteigende Betäubungsspannung erzielt man eine Betäubung, die zu sehr viel weniger heftigen Reaktionen des betäubenden Tieres als bei schlagartig auf den Maximalwert erhöhter Betäubungsspannung führt, so daß Krämpfe oder Blutungen des Tieres aufgrund der Betäubung verringert werden. Die bei dieser bekannten Methode verwendete Betäubungshöchstspannung von 170 V ist jedoch zur Erzielung einer ausreichend guten, zufriedenstellend nachwirkenden Betäubung zu niedrig. Bei der bekannten Vorrichtung wird das Betäubungsspannungsprofil mit allmählich ansteigender Spannung mit großem mechanischen und elektromechanischen Aufwand erreicht, nämlich mit Hilfe von Stelltransformatoren, Stellmotoren und Nockensteuerungen. Daher ist die Vorrichtung nicht nur aufwendig und teuer, sondern unterliegt auch den Nachteilen von Abnutzung und Ausfallwahrscheinlichkeit mechanischer und elektromechanischer Vorrichtungen.

Aufgabe der Erfindung ist es, ein Verfahren und eine vereinfachte und zuverlässigere Vorrichtung zur elektrischen Betäubung von Schlachttieren verfügbar zu machen, mit denen sich sowohl eine gute, möglichst lang nachdauernde Betäubung erreichen als auch Schlachtschäden trotz hoher Betäubungsspannungen vermeiden lassen.

Die Lösung dieser Aufgabe besteht in einem Verfahren zum elektrischen Betäuben von Schlachttieren, insbesondere Schweinen, bei dem der Tierkörper über Betäubungselektroden einer Betäubungsspannung ausgesetzt wird, die innerhalb der Betäubungsspannungsbeaufschlagungszeit von einem Anfangswert mit einer Phase allmählichen Anstiegs bis zu einem Höchstwert geändert und danach auf einen Endwert verringert wird, wobei der allmähliche Spannungsanstieg vor Erreichen des Höchstwertes vorübergehend durch ein Konstanthalten auf einem Zwischenwert unterbrochen wird.

Durch diesen allmählichen Anstieg der Betäubungsspannung mit Zwischenhalt erreicht man eine besonders gute Betäubungstiefe. Denn während des Konstanthaltens der Betäubungsspannung beim Zwischenhalt kommt es zu einer Aktivitätsentspannung des zu betäubenden Tieres, so daß die nachfolgende Betäubungsphase während des allmählichen Anstiegs bis zum Betäubungsspannungshöchstwert zu einem besonders tiefen Betäubungszustand führt. Einen solchen besonders tiefen Betäubungszustand kann man bei Anwendung der erfindungsgemäßen Maßnahme in einer relativ kurzen Betäubungszeit erreichen, und dieser Betäubungszustand hält nach dem Abschalten der Betäubungsspannung relativ lange an. Dies ist sehr wichtig, da das Abstechen und Ausbluten der Tiere erfolgen muß, solange ein ausreichend tiefer Betäubungszustand andauert. Besonders bei der Massenverarbeitung in einer Großschlachtanlage ist es nun von großem Vorteil, wenn dieser Betäubungszustand nicht zu früh zu Ende geht. Denn dann ist ein Abstechen und Ausbluten im Betäubungszustand auch dann noch möglich, wenn aus abwicklungstechnischen Gründen eine etwas größere zeitliche und räumliche Distanz zwischen der Betäubungsstation und der Abstechstation vorteilhaft ist.

Da man bei Anwendung der erfindungsgemäßen Maßnahme die Phase des allmählichen Betäubungsspannungsanstiegs relativ kurz machen kann, gelangt das Tier relativ schnell in einen Bereich einer mit Sicherheit betäubend wirkenden Spannung. Durch den Zwischenhalt während des allmählichen Spannungsanstiegs wird nun einerseits die Erscheinung zunehmender Verkrampfung des zu betäubenden Tieres vorübergehend unterbrochen, so daß den durch die Verkrampfung beanspruchten Muskeln und Adern die Möglichkeit gegeben wird, sich dem Verkrampfungszustand allmählich anzupassen, wodurch die Wahrscheinlichkeit für Muskel- und Aderrisse sehr stark verringert wird. Andererseits wird durch diesen Zwischenhalt der Betäubungsspannung eine Aktivitätsentspannung des zu betäubenden Tieres ermöglicht, so daß die weitere Erhöhung der Betäubungsspannung nach dem Zwischenhalt auf ein Tier trifft, das wesentlich stärker entspannt ist, als wenn die Betäubungsspannung durchgehend vom Anfangswert bis zum Höchstwert erhöht worden wäre. Daher kommt es bei dem weiteren Betäubungsspannungsanstieg nach dem Zwischenhalt zu einer viel tieferen, wirksameren und daher länger andauernden Betäubung des Tieres. Da diese weitere Betäubungsspannungserhöhung an einem Tier vorgenommen wird, dessen Adern und Muskeln sich im Zeitraum des Zwischenhalts an den durch die Betäubungsspannung verursachten Verkrampfungszustand anpassen konnten, ist die Wahrscheinlichkeit von Muskel- und/oder Aderrissen durch die Erhöhung der Betäubungsspannung auf den Höchstwert ebenfalls stark herabgesetzt.

Den so erreichten Betäubungszustand kann man nochmals dadurch vertiefen, daß man in bevorzugter Weise die Betäubungsspannung nach dem Erreichen des Höchstwertes vorübergehend konstant auf diesem Höchstwert hält. Ein tiefer Betäubungszustand verlängert nicht nur die Nachbetäubungszeit nach Beendigung des Betäubungsvorgangs, sondern trägt zu einer Qualitätsverbesserung des Schlachtfleisches bei.

Besonders zu bevorzugen ist des weiteren, die Betäubungsspannung vom Höchstwert aus nicht schlagartig, sondern allmählich auf einen Schlußwert abzusenken, bei dem der Betäubungsvorgang beendet wird. Durch dieses allmähliche Absenken der Betäubungsspannung vom Höchstwert aus wird eine Entkrampfung des betäubten Tieres erreicht, was für das anschließende Abstechen und Ausbluten von großem Vorteil ist, da es diese beiden Vorgänge erleichtert und ein besseres Ausbluten ermöglicht, das wiederum der Fleischqualität zugute kommt.

Man kann nun während des gesamten Betäubungsvorganges als Betäubungsspannung eine Gleichspannung oder eine Wechselspannung verwenden. Als besonders vorteilhaft ist es anzusehen, während der Betäubungsabschnitte allmählich ansteigender oder allmählich abnehmender Spannung Wechselspannung, während der Betäubungsabschnitte konstanter Betäubungsspannung Gleichspannung zu verwenden. Dies deshalb, weil bei allmählich ansteigender Wechselspannung die Verkrampfung noch weicher einsetzt als bei allmählich ansteigender Gleichspannung, weil andererseits während der Phasen konstanter Spannung eine Gleichspannung zu einer stärkeren Aktivitätsentspannung und damit größeren Betäubungstiefe führt als eine konstante Wechselspannung.

Als Gleichspannung kann auch pulsierende Gleichspannung verwendet werden.

Besonders vorteilhaft ist ein Betäubungsspannungsverlauf, bei dem zu Beginn des Betäubungsvorgangs eine Wechselspannung im Bereich von 80 V bis 270 V, vorzugsweise von 150 V, angelegt und dann während eines ersten Betäubungsabschnittes auf eine Spannung im Bereich von 130 V bis 450 V, vorzugsweise von 250 V, erhöht wird, bei dem dann in einem nächsten Betäubungsabschnitt eine Gleichspannung dieses Wertes konstant gehalten wird. In einem nächsten Betäubungsabschnitt wird dann eine Wechselspannung dieses Spannungswertes allmählich bis auf eine Höchstspannung im Bereich von 300 V bis 1000 V, vorzugsweise von 550 V, erhöht. Danach wird eine konstante Gleichspannung dieses Spannungswertes während eines weiteren Betäubungsabschnittes aufrechterhalten. In einem letzten Betäubungsabschnitt wird dann eine Wechselspannung dieses Höchstwertes bis auf einen Schlußwert im Bereich von 100 V bis 330 V, vorzugsweise von 180 V, abgesenkt.

Solche Betäubungsspannungswerte können auch dann verwendet werden, wenn während des gesamten Betäubungsvorgangs nur Gleich- oder nur Wechselspannung benutzt wird. Die Betäubungszeit wird im Bereich von 1 bis 4 s, vorzugsweise im Bereich von 1,5 bis 2 s, gewählt.

Bei einer besonders bevorzugten Ausführungsform wird der Widerstand eines jeden einzelnen Tieres gemessen und wird der Betäubungsspannungsverlauf für jedes zu betäubende Tier individuell in Abhängigkeit von dem für dieses Tier gemessenen Widerstand eingestellt. Dies wird vorzugsweise derart vorgenommen, daß das Profil des Betäubungsspannungsverlaufs prinzipiell beibehalten wird, daß jedoch dieses Spannungsprofil mehr oder weniger komprimiert wird. Die einzelnen Tiere sind nämlich unterschiedlich vital, und ein bestimmter Betäubungszustand wird je nach Vitalität des einzelnen Tieres durch unterschiedlich hohe Spannungsprofile erreicht. Da der elektrische Widerstand eines Tieres als Maß für dessen individuelle Vitalität genommen werden kann, führt man dann, wenn man das Spannungsprofil der Betäubungsspannung in Abhängigkeit von dem individuellen Tierwiderstand einstellt, eine individuelle Dosierung entsprechend der individuellen Vitalität durch. Die Dosierung der Betäubungsspannung entsprechend der individuellen Vitalität bringt den Vorteil mit sich, daß das einzelne Tier keiner höheren Betäubungsspannung als für dieses Tier ausreichend ausgesetzt zu werden braucht. Andererseits erreicht man damit, daß auch sehr vitale Tiere ausreichend gut betäubt werden. Überdies führt die individuelle Dosierung zu einer zeitlichen Verkürzung des Betäubungsvorgangs und damit zu einem höheren Durchsatz von Schlachttieren. Wenn man daran denkt, daß in einem modernen Schlachthof täglich tausend Schweine und mehr geschlachtet werden, ist eine Verringerung der Betäubungszeit pro Schlachttier erstrebenswert. Eine solche zeitliche Verkürzung des Betäubungsvorgangs infolge der individuellen Dosierung der Betäubungsspannung kommt folgendermaßen zustande: Wenn man das Auftreten von Muskelrissen und Adernverletzungen verhindern oder bis zu einem bestimmten Ausmaß verringern möchte, darf der allmähliche Spannungsanstieg eine bestimmte Steilheit nicht überschreiten. Wenn man nun die Betäubungsspannung nicht individuell dosiert, sondern die Höchstspannung für die vitalsten Tiere auslegt, ist für jedes Tier ein relativ großer Zeitbedarf für den Betäubungsvorgang erforderlich. Geht man jedoch bei der Auslegung des Spannungsprofils von mittelmäßig vitalen Tieren aus, wird ohne Überschreitung der genannten Steilheit des Spannungsanstiegs die hierfür erforderliche Höchstspannung wesentlich eher erreicht und damit der gesamte Betäubungsvorgang verkürzt. Bei besonders vitalen Tieren, bei denen dieser Höchstwert nicht zu einer guten Betäubung führen würde, ist durch die individuelle Dosierung auch eine gute Betäubung erzielbar. Man kann nun für diese hochvitalen Tiere den Betäubungsvorgang insgesamt verlängern, um die genannte Steigung des Spannungsanstiegs nicht zu überschreiten, wodurch der mittlere Zeitbedarf pro Betäubungsvorgang nur unwesentlich erhöht würde, oder man kann die Betäubungsvorgangszeit unverändert lassen und bei hochvitalten Tieren eine höhere Wahrscheinlichkeit für das Auftreten von Muskelrissen und Aderverletzungen in Kauf nehmen.

Die Widerstandsmessung wird vor dem Betäubungsvorgang vorgenommen. Es können auch während des Betäubungsvorgangs mehrfach solche Widerstandsmessungen durchgeführt werden. In diesem Fall wird der Betäubungsvorgang alle 5 bis 20 ms, vorzugsweise alle 10 ms, für eine 0,1 bis 1 ms vorzugsweise 1 ms, dauernde Widerstandsmessung unterbrochen. Der Betäubungsvorgang wird nicht begonnen bzw. unterbrochen, wenn ein einen vorbestimmten oberen oder unteren Grenzwert über- bzw. unterschreitender Widerstand gemessen wird.

Im Zusammenhang mit einer Schlachttierbetäubung den Widerstand des zu betäubenden Tieres zu messen und die Betäubung in Abhängigkeit von dem gemessenen Widerstand einzustellen, ist an sich aus der DE-A-2 135 900 bekannt. Während des Betäubungsvorgangs eine wiederholte Widerstandsmessung durchzuführen und den Betäubungsvorgang abzubrechen, wenn der Widerstand nicht mehr die notwendige Größe hat, ist an sich aus der DE-A-2 329 983 bekannt.

Eine Vorrichtung zur elektrischen Betäubung von Schlachttieren, insbesondere Schweinen, mit Betäubungselektroden, über die der Tierkörper einer Betäubungsspannung ausgesetzt wird, mit einem steuerbaren Betäubungsspannungsgenerator und mit einer Steuereinrichtung zur Erzeugung einer Betäubungsspannung, die sich innerhalb der Betäubungsspannungsbeaufschlagungszeit von einem Anfangswert mit einer Phase allmählichen Anstiegs bis zu einem Höchstwert ändert und danach auf einen Endwert abfällt, zeichnet sich erfindungsgemäß dadurch aus, daß die Steuereinrichtung den Betäubungsspannungsgenerator veranlaßt, den allmählichen Spannungsanstieg vor Erreichen des Höchstwertes vorübergehend durch Konstanthalten auf einem Zwischenwert zu unterbrechen.

Bei einer besonders bevorzugten Ausführungsform einer solchen Vorrichtung veranlaßt die Steuereinrichtung den Betäubungsspannungsgenerator zur Abgabe einer Betäubungsspannung mit dem weiter oben erläuterten Spannungsprofil. Zu diesem Zweck wird der Betäubungsspannungsgenerator bevorzugt als Wechselspannungsgenerator ausgebildet, der zur Erzeugung des unterschiedliche Spannungswerte aufweisenden Spannungsprofils von einer Phasenanschnittsteuerung beeinflußt wird. Die Ausgangsspannung dieses Wechselspannungsgenerators wird vorzugsweise einem Wechselspannungs/Gleichspannungs-Umschalter einerseits direkt und andererseits über eine Gleichrichterschaltung, vorzugsweise mit steuerbaren Gleichrichtern, die von der Steuereinrichtung gesteuert werden, zugeführt. Von der Steuereinrichtung wird einerseits die Phasenanschnittsteuerung und andererseits der Wechselspannungs/Gleichspannungs-Umschalter so angesteuert, daß in den einzelnen Betäubungsabschnitten eine allmählich ansteigende bzw. abfallende Wechselspannung bzw. eine konstante oder pulsierende Gleichspannung auf die Betäubungselektroden gegeben wird.

Wenn man in der besonders bevorzugten Weise das Spannungsprofil vom jeweils individuell gemessenen Tierwiderstand abhängig machen will, führt man der Steuereinrichtung den jeweils gemessenen Widerstand als Beeinflussungssignal zu, im Fall einer digital arbeitenden Steuereinrichtung als mit Hilfe eines Analog/Digital-Wandlers binär kodierten Widerstandswert.

Bei einer besonders bevorzugten Ausführungsform der Steuereinrichtung führt man dem einen Eingang einer Komparatorschaltungseinrichtung ein zeitbestimmendes Sägezahnsignal zu und beaufschlagt den anderen Eingang dieser Komparatorschaltungsanordnung mit einem eine Ansprechschwelle definierenden Bezugsspannungswert. Das zeitgebende Sägezahnsignal gibt die Länge des Betäubungsvorgangs vor, und die Ansprechschwelle entspricht dem Beginn eines Betäubungsabschnittes innerhalb dieses Betäubungsvorgangs, in dem eine Änderung der Betäubungsspannung herbeigeführt werden soll, beispielsweise ein Umschalten von einer ansteigenden Spannung auf eine konstante Spannung oder umgekehrt oder ein Umschalten von Wechselspannung auf Gleichspannung oder umgekehrt.

An den Ausgang der Komparatorschaltung ist über eine Schaltereinrichtung und eine Konstantstromquelle ein Kondensator angeschlossen. Die Komparator-Schaltungsanordnung gibt zum Zeitpunkt des Beginns des allmählichen Anstiegs der Betäubungsspannung an die Schaltereinrichtung ein diese in den leitenden EIN-Zustand steuerndes Signal ab und gibt zum Zeitpunkt des Endes des allmählichen Anstiegs der Betäubungsspannung ein die Schaltereinrichtung in den AUS-Zustand steuerndes Signal ab. Die Ladespannung des Kondensators wird der Phasenanschnittsteuerschaltung als Phasensteuersignal zugeführt.

Eine solche Vorrichtung ist nun nicht nur zur Erzeugung einer allmählich ansteigenden Betäubungsspannung mit Zwischenhalt verwendbar, sondern auch zur Erzeugung allmählich ansteigender und/oder abfallender Betäubungsspannungen an sich geeignet und vorteilhaft. Ein solches Betäubungsspannungsprofil läßt sich mit einer solchen Vorrichtung auf wesentlich einfachere, preiswertere und zuverlässigere Art erreichen als mit der Vorrichtung gemäß der DE-OS 1 757 231.

Auf ganz besonders bevorzugter Weise kann man mit Hilfe dieser Komparatorschaltungsanordnung das Profil der Betäubungsspannung steuern. Zu diesem Zweck kann man einen Schalter über eine vom Ausgangssignal der Komparatorschaltungsanordnung gesteuerte Ansteuerschaltung schalten.

Beispielsweise ist der Schalter so lange, wie das zeitbestimmende Sägezahnsignal den Ansprechschwellenwert der Komparatorschaltungsanordnung noch nicht erreicht hat, geöffnet, so daß keine Aufladung der Ladeschaltung erfolgen kann. Sobald der Ansprechschwellenwert erreicht ist, wird der Schalter leitend gesteuert und kann der Ladevorgang der Ladeschaltung beginnen. Die Ladespannung des Ladekondensators beeinflußt, vorzugsweise über einen Optokoppler, den zeitbestimmenden Widerstand der Phasenanschnittsteuerung, so daß die jeweilige Höhe des Betäubungsspannungsprofils von der Ladespannung des Kondensators abhängt. Das heißt, solange der Schalter geöffnet ist und der Ladevorgang des Ladekondensators noch nicht angefangen oder durch das Öffnen des Schalters unterbrochen ist, erzeugt die Phasenanschnittsteuerschaltung eine konstante Betäubungsspannung. Während des Ladevorgangs dagegen steigt die von der Phasenanschnittsteuerschaltung beeinflußte Betäubungsspannung an.

Es kann aber auch eine Entladeschaltung vorgesehen werden, mittels welcher die auf dem Ladekondensator vorhandene Spannung in Abhängigkeit von einem bestimmten Ansprechschwellenwert der Komparatorschaltungsanordnung entladen wird, so daß die Phasenanschnittsteuerschaltung ein Abnehmen der Betäubungsspannung veranlaßt.

Bei einer ganz besonders bevorzugten Ausführungsform weist die Komparatorschaltungsanordnung mehrere Komparatoren auf, die das zeitbestimmende Sägezahnsignal je mit einer anderen Ansprechschwellenbezugsspannung vergleichen und somit zu verschiedenen Zeiten des Betäubungsvorgangs Ausgangssignale abgeben, beispielsweise zu Beginn eines jeden neuen Betäubungsabschnittes des gesamten Betäubungsablaufs. Mit Hilfe der Ausgangssignale dieser Komparatoren kann man über die Ansteuerschaltung den das Laden oder Nichtladen des Ladekondensators beeinflussenden Schalter und den den Entladevorgang beeinflussenden Schalter so steuern, daß man beispielsweise im ersten Betäubungsabschnitt eine ansteigende Spannung, in einem zweiten Betäubungsabschnitt eine konstante Spannung, in einem dritten Betäubungsabschnitt wieder eine ansteigende Spannung, in einem vierten Betäubungsabschnitt eine konstante Spannung und in einem letzten Betäubungsabschnitt schließlich eine abnehmende Spannung erhält.

Bevorzugterweise weist die Schaltereinrichtung einen ersten Schalter auf, mit dem der Ladevorgang des Kondensators ein- und ausschaltbar ist, sowie einen zweiten Schalter, über den der Kondensator an eine Entladestromquelle anschließbar ist. Ferner weist sie einen dritten Schalter auf, über den die Ladung des Kondensators kurzschließbar ist. Dabei sind die einzelnen Schalter von den Ausgängen der einzelnen Komparatoren über eine erste Ansteuerschaltung so ansteuerbar, daß der erste Schalter während des ersten und des dritten Betäubungsabschnittes in den EIN-Zustand und während des zweiten und des vierten Betäubungsabschnittes in den AUS-Zustand, der zweite Schalter während des letzten Betäubungsabschnittes und der dritte Schalter während des Nicht-Vorliegens eines Betäubungsfreigabesignals in den EIN-Zustand gesteuert werden.

Zusätzlich kann man die Ausgangssignale der Komparatoren auf eine zweite Ansteuerschaltung einwirken lassen, über die zu den Beginnzeitpunkten der einzelnen Betäubungsabschnitte eine Umschaltung der Betäubungsspannung wahlweise auf Wechselspannung oder Gleichspannung ermöglicht wird.

Die Steuereinrichtung kann einen Speicher für den zwischen den Elektroden gemessenen Widerstand aufweisen. Der aus dem Speicher jeweils ausgelesene Widerstandswert kann der Phasenanschnittsteuerung als ein Signal zugeführt werden, das den Phasenanschnittwinkel beeinflußt und damit den Betrag der jeweils erzeugten Betäubungsspannung. Auf diese Weise kann man die Betäubungsspannung entweder alleine durch die von der Komparatorschaltungsanordnung gelieferten Signalwerte, alleine durch die vom Speicher gelieferten Widerstandswerte oder durch den gemeinsamen Einfluß der Komparatorausgangswerte und der Widerstandswerte beeinflussen.

Bei einer besonders bevorzugten Ausführungsform weist der Speicher einen oder mehrere Einlesesteueranschlüsse auf, die mit einem bzw. mehreren Ausgängen der Komparatorschaltungsanordnung verbunden werden. Sobald das zeitbestimmende Sägezahnsignal den Ansprechschwellenwert desjenigen Komparators erreicht hat, mit dem ein Einlesesteueranschluß des Speichers verbunden ist, übernimmt der Speicher als neuen Speicherwert den an seinen Eingang gelieferten momentanen Widerstandsmeßwert. Beispielsweise kann man auf diese Weise den beim Beginn des Betäubungsvorgangs vorliegenden Widerstandsmeßwert und den zu Beginn eines späteren Betäubungsabschnittes vorliegenden Widerstandsmeßwert in den Speicher übernehmen und das Betäubungsspannungsprofil während des Betäubungsvorgangs mehrfach entsprechend dem individuellen Körperwiderstand des gerade zu betäubenden Schlachttieres einstellen.

Neben der zuvor erwähnten Möglichkeit, den zwischen den Betäubungelektroden vorhandenen Widerstand während des Betäubungsvorgangs mehrfach, insbesondere periodisch, zu messen, besteht aber auch die Möglichkeit, diesen Widerstandswert kontinuierlich zu überwachen. Zu diesem Zweck kann man in vorteilhafter Weise in die Zuleitungen zu den Betäubungselektroden einen Modulationstransformator und einen Demodulationstransformator einfügen. Dem Modulationstransformator wird von einem Modulator ein Meßwechselspannungssignal, dessen Frequenz von derjenigen der Betäubungswechselspannung verschieden ist, beispielsweise im Größenbereich von 20 kHz liegt, zugeführt. Dieses Meßwechselspannungssignal wird entsprechend dem zwischen den Betäubungselektroden vorhandenen Widerstand beeinflußt und mit Hilfe des Demodulationstransformators zu einem Demodulator geführt, der ein dem gemessenen Widerstand entsprechendes Widerstandssignal an die Steuereinrichtung liefert.

Die erfindungsgemäße Methode eignet sich sowohl für das Betäuben mittels einer insbesondere von Hand an die zu betäubenden Tiere ansetzbaren Betäubungsgabel oder Betäubungszange als auch für das Betäuben in einer Betäubungsanlage mit einem Betäubungsförderer, vorzugsweise in Form eines die Tiere von beiden Seiten her festhaltenden Förderers (restrainer).

Aus mehrfachen Sicherheitsgründen ist es besonders vorteilhaft, vor dem Betäubungsvorgang oder zusätzlich sogar während des Betäubungsvorgangs zu überwachen, ob der gemessene Tierwiderstand in bestimmten Grenzen liegt. Bei einer besonders bevorzugten Ausführungsform wir mit Hilfe von Komparatorschaltungen festgestellt, ob der Tierwiderstand über einem Mindestwiderstand, im folgenden Ansprechwiderstand genannt, liegt und einen bestimmten Höchstwiderstand, im folgenden Grenzwiderstand genannt, nicht überschreitet. Der Ansprechwiderstand liegt vorzugsweise im Größenbereich von etwa 100 Ohm, und der Grenzwiderstand liegt vorzugsweise etwa im Größenbereich von 1500 bis 1600, besonders bevorzugt bei 1550 Ohm. Nur wenn ein Tierwiderstand im Bereich zwischen der Ansprech- und der Grenzschwelle gemessen wird, wird die Betäubung freigegeben. Dies dient einerseits dem Schutz der Betäubungsvorrichtung vor schädlichen Kurzschlüssen. Solange ein unter der Ansprechschwelle liegender Widerstand gemessen wird, wird ein Kurzschluß oder kurzschlußähnlicher Zustand vermutet und der Betäubungsvorgang nicht freigegeben. Die Grenzschwelle andererseits dient zum einen dem Schutz der Bedienungspersonen, da der elektrische Widerstand von Menschen wesentlich höher ist als beispielsweise der von Schweinen, und verhindert zum anderen, wenn man die Widerstandsmessung auch während des Betäubungsvorgangs durchführt, daß die Schlachttiere beim Betäubungsvorgang getötet werden und daher nicht mehr geschlachtet werden dürfen. Denn der Widerstand eines Tieres steigt vor dessen Exitus nicht linear an, so daß man eine rechtzeitige Abschaltung des Betäubungsvorgangs durchführen kann, wenn man den Grenzwiderstand geeignet wählt.

Um den dreifachen Schutz vor Kurzschluß, Gefährdung von Bedienungsperson und Exitus des nur zu betäubenden Tieres wirksam zu machen, kann man den Betäubungsvorgang mehrfach, vorzugsweise periodisch, in Zeitabständen von 5 bis 20 ms, bevorzugt in Zeitabständen von 10 ms für Widerstandsmessungen unterbrechen, und zwar jeweils bis zu 1 ms. Wenn man den Betäubungsvorgang zum Zweck der Widerstandsmessung nicht länger als 1 ms unterbricht, ändert sich durch diese Unterbrechung der vor dieser Unterbrechung erreichte Betäubungszustand nicht, so daß die Unterbrechungen zur Widerstandsmessung keinen nachteiligen Einfluß auf den Betäubungsvorgang haben. Wenn man den Widerstand periodisch in Abständen von beispielsweise 10 ms mißt, kann die Abschaltung der Betäubungsspannung dann, wenn eine gemessene Widerstandserhöhung auf eine Spannungsberührung durch eine Bedienungsperson oder auf den bevorstehenden Exitus des zu betäubenden Tieres hinweist, auch im ungünstigsten Fall bereits innerhalb von 10 ms seit diesem Zustand erfolgen, also bevor die Bedienungsperson Schaden nimmt oder der Exitus des Tieres eintritt.

Die erfindungsgemäße Betäubungsmethode läßt sich besonders vorteilhaft anwenden bei einer automatischen Betäubungsanlage mit einem Betäubungsförderer und Elektroden, die einerseits von dem geförderten Tier aus einer nach unten ragenden Stellung in eine in Förderrichtung weisende Schrägstellung geschwenkt werden und andererseits auf einem Elektrodenschlitten angeordnet sind, der während des Betäubungsvorgangs mit dem zu betäubenden Tier mitbewegt wird, um die Elektroden während des gesamten Betäubungsvorgangs unverändert, beispielsweise in den Augenbereichen des Tieres zu halten. Bei einer besonders bevorzugten Ausführungsform der erfindungsgemäßen

0 060 527

Betäubungsvorrichtung werden ein Mindestverschwenkungswinkel und ein Endverschwenkungswinkel mit Hilfe eines Mindestwinkelschalters bzw. eines Endwinkelschalters erfaßt. Mittels einer Logikschaltung sorgt man dafür, daß ein Signal »Widerstand in Ordnung« vom Ausgang der Komparatorschaltung nur dann eine Betäubungsfreigabe auslösen kann, wenn der Mindestverschwenkungswinkel erreicht ist, nicht jedoch der Endverschwenkungswinkel. Dadurch stellt man sicher, daß der Betäubungsvorgang nur einsetzen kann, wenn die Elektrode vom Tierkörper bereits um ein Mindestmaß verschwenkt worden ist, der Tierkörper also mit Sicherheit an der Elektrode anliegt. Damit vermeidet man andererseits einen erneuten Betäubungsvorgang desselben Tieres während des Zeitraumes, in welchem die Elektroden von dem Rücken des unter ihnen hindurch geförderten Tieres über den Endverschwenkungswinkel hinausgeschwenkt sind.

Das von der Logikschaltung abgegebene Signal »Widerstand in Ordnung« wird vorzugsweise verzögert, und zwar bis zu 2 s, um sicherzustellen, daß der Betäubungsvorgang erst einsetzt, nachdem die Elektroden sicher am Tierkopf anliegen.

Vorzugsweise ist eine Zeitgeberschaltung vorgesehen, die beim Eintreffen des Signals »Widerstand in Ordnung« zur Abgabe eines Betäubungsfreigabesignals vorbestimmter Länge veranlaßt wird. Nur während des Vorliegens dieses Freigabesignals kann die Steuereinrichtung die Abgabe der Betäubungsspannung veranlassen. Vorzugsweise ist die Zeitgeberschaltung mit einem Rücksetzanschluß versehen, an den über eine logische Verknüpfungsschaltung der Endwinkelschalter und ein Endlagenschalter des Elektrodenschlittens angeschlossen sind. Das heißt, sobald die Betäubungselektroden in den Endverschwenkungswinkel verschwenkt und/oder der Elektrodenschlitten eine Endstellung erreicht hat, wird die Zeitgeberschaltung zurückgestellt, das heißt, wird das Freigabesignal beendet und damit der Betäubungsvorgang abgebrochen. Dieser Logikverknüpfungsschaltung kann außerdem ein vom Ausgang der Komparatorschaltung stammendes Fehlersignal, das anzeigt, daß der gemessene Widerstand nicht in Ordnung ist, zugeführt werden. Beim Feststellen der Unterschreitung des Ansprechwiderstandes bzw. beim Überschreiten des Grenzwiderstandes kann dann der Betäubungsvorgang ebenfalls vorzeitig abgebrochen werden.

Bei der zuletzt erwähnten Ausführungsform kommt es zu einer Beendigung des Betäubungsvorgangs, wenn eines oder mehrere der folgenden Kriterien erfüllt sind:

1. Wenn die von der Zeitgeberschaltung bestimmte Zeitdauer des Betäubungsfreigabeimpulses vorbei ist;
2. wenn der Endverschwenkungswinkel der Betäubungselektroden erreicht ist;
3. wenn der Elektrodenschlitten bei seiner Vorschubbewegung eine Endlage erreicht hat;
4. wenn während des Betäubungsvorgangs ein Kurzschlußfall festgestellt wird; und
5. wenn während des Betäubungsvorganges ein zu hoher Widerstand zwischen den Betäubungselektroden festgestellt wird, der auf Spannungsberührung durch eine Bedienungsperson oder den bevorstehenden Exitus des zu betäubenden Tieres hinweist.

Im folgenden werden die Erfindung und Weiterbildungen der Erfindung anhand von beispielsweisen Ausführungsformen näher erläutert. In der Zeichnung zeigt

Fig. 1 eine Betäubungsanlage für zu schlachtende Schweine in Seitenansicht,

Fig. 2 eine Stirnansicht der in Fig. 1 gezeigten Betäubungsanlage,

Fig. 3 eine Seitenansicht des Betäubungsvorrichtungsteils der Betäubungsanlage,

Fig. 4 ein bevorzugtes Spannungsprofil für die Betäubungsspannung,

Fig. 5 ein schematisches Block- und Logik-Schaltbild einer bevorzugten Ausführungsform des elektrischen Teils der Betäubungsvorrichtung und

Fig. 6 eine bevorzugte Ausführungsform einer elektronischen Steuereinrichtung der Betäubungsvorrichtung.

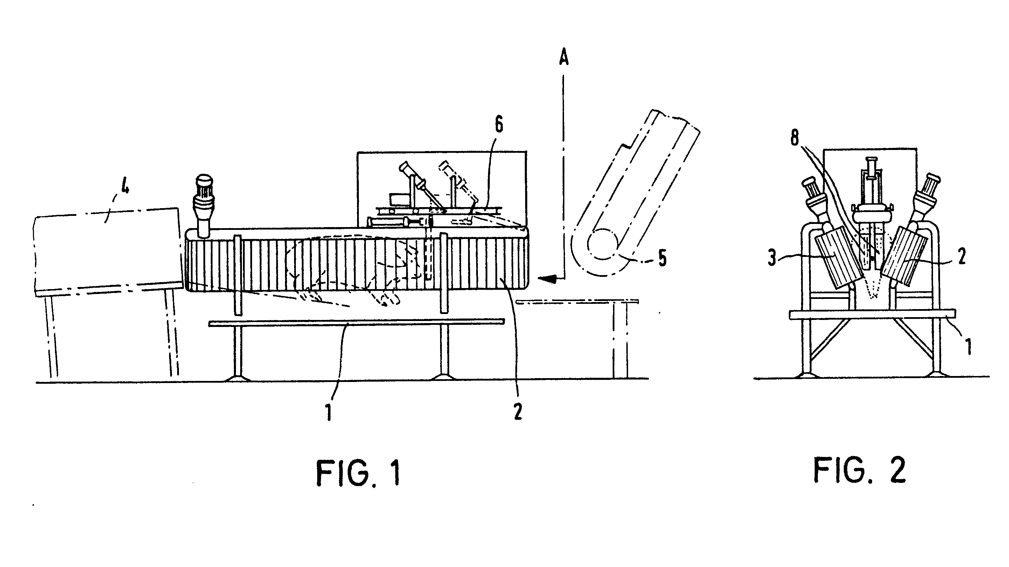

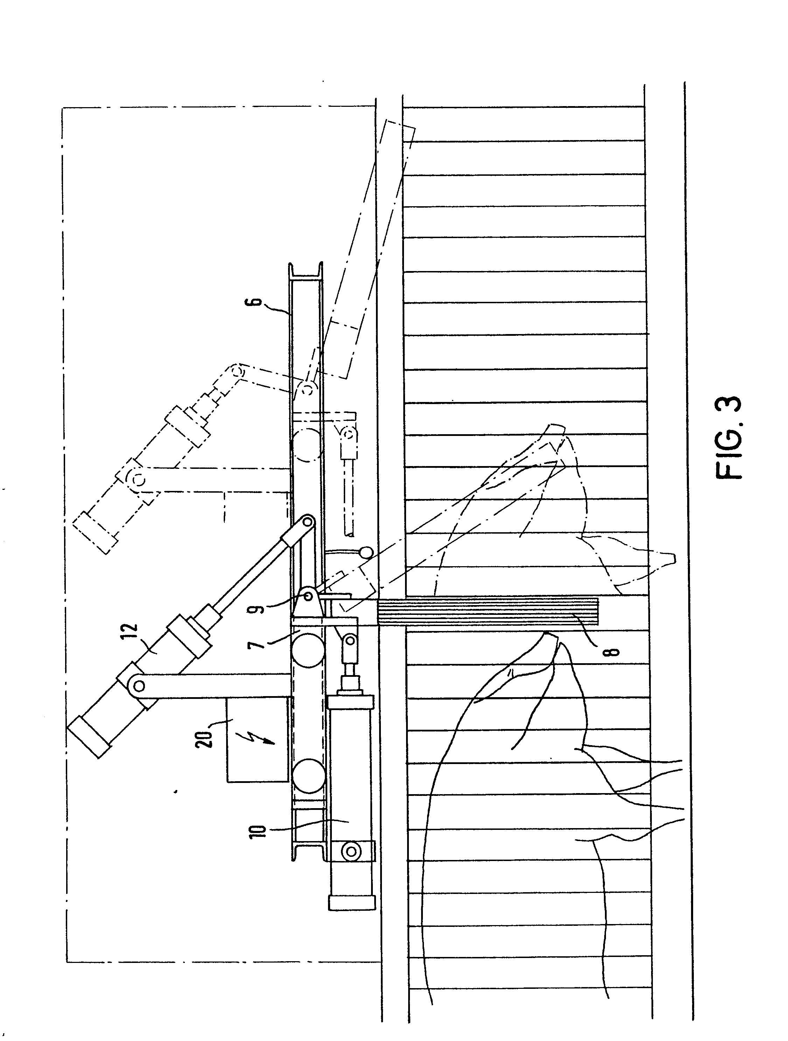

Die Fig. 1 bis 3 zeigen die in der eigenen deutschen Patentanmeldung P 3 029 037.0 dargestellte Vorrichtung zum Betäuben von Schlachtschweinen, die hier nur kurz zum leichteren Verständnis des Erfindungsgegenstandes erläutert wird, wobei hinsichtlich der Einzelheiten auf diese Patentanmeldung verwiesen wird.

Diese Betäubungsanlage umfaßt einen Betäubungsförderer, der von einem Maschinengestell 1 getragen wird und zwei parallel nebeneinander angeordnete Förderbänder 2 und 3 umfaßt, deren zueinander weisende Förderflächen V-förmig zueinander geneigt sind. Über eine als Zwangsweg ausgebildete Rampe 4 laufen die Schlachttiere, bei denen es sich in der folgenden Beschreibung um Schweine handelt, in den Betäubungsförderer hinein, wo sie, nachdem sie von den Förderbändern ergriffen worden sind, den Boden unter den Füßen verlieren. In Förderrichtung hinter dem Betäubungsförderer ist ein Aufzug 5 angeordnet, an dem die betäubten Tiere mittels Förderhaken befestigt werden und zu einer über die Entblutungsstrecke führenden Hängebahn gezogen werden. In den Förderweg des Betäubungsförderers 2, 3 hängen Betäubungselektroden 8 herab, mit denen die Schlachttiere während ihrer Förderung in Berührung kommen, vorzugweise in den Augenbereichen. Die Betäubungselektroden sind um eine quer zur Förderrichtung verlaufende Achse 9 schwenkbar und werden durch die Förderbewegung der zu betäubenden Tiere im Gegenuhrzeigersinn nach oben verschwenkt, und zwar gegen die dämpfende Kraft eines Zylindertriebes 12, der außerdem die Funktion hat, die verschwenkten Elektroden nach erfolgter Betäubung und Passieren eines Tieres nach unten in die Ausgangsstellung zurückzuschwenken. Die Betäubungselektroden 8 sind an einem Elektrodenschlitten 7 befestigt, der längs einer Führungsbahn 6 in Tierförderrichtung vor- und zurückgeschoben werden kann, und zwar mit Hilfe eines Schlittenzylindertriebes 10. Der Schlittenzylindertrieb 10 ist mit einem Schlittenvortriebventil und einem Schlittenrückführventil verbunden, bei deren Öffnung der Schlitten pneumatisch oder hydraulisch in Tierförderrichtung von einer Anfangs- in eine Endstellung und wieder zurück bewegt werden kann. Der elektrische Teil der Betäubungsvorrichtung kann teilweise oder ganz in einem Gehäuse 20 auf dem Elektrodenschlitten 7 untergebracht sein.

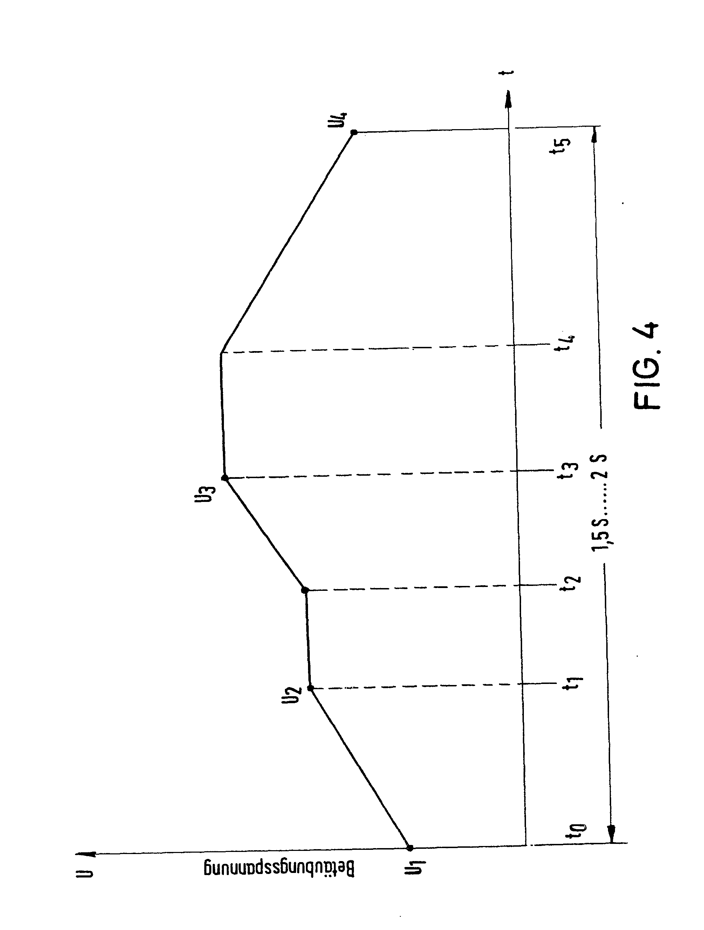

In Fig. 4 ist ein bevorzugtes Profil für den zeitlichen Betäubungsspannungsverlauf dargestellt. Der Betäubungsvorgang beginnt mit dem Anlegen einer Betäubungswechselspannung $U_1$ an die Betäubungselektroden 8. Während eines ersten Betäubungsabschnittes $t_0$ bis $t_1$ steigt die Wechselspannung auf einen Spannungswert $U_2$ an. Während eines von $t_1$ bis $t_2$ reichenden zweiten Betäubungsabschnittes wird eine konstante Gleichspannung des Spannungswertes $U_2$ angelegt. In einem von $t_2$ bis $t_3$ dauernden dritten Betäubungsabschnitt wird dann eine vom Spannungswert $U_2$ bis zu einem Spannungshöchstwert $U_3$ ansteigende Wechselspannung angelegt. Während eines von $t_3$ bis $t_4$ dauernden vierten Betäubungsabschnittes wird eine konstante Gleichspannung mit diesem Höchstspannungswert $U_3$ an die Betäubungselektroden 8 angelegt. In einem von $t_4$ bis $t_5$ dauernden letzten Betäubungsabschnitt wird schließlich eine von dem Höchstspannungswert $U_3$ auf einen Schlußspannungswert $U_4$ abfallende Wechselspannung angelegt.

Im ersten Betäubungsabschnitt $t_0$ bis $t_1$ kommt es aufgrund der allmählich ansteigenden Spannung nur zu einer allmählichen Verkrampfung des zu betäubenden Tieres, durch welche, wie bereits weiter oben erläutert worden ist, Muskel- und Aderrisse oder gar Knochenbrüche aufgrund einer schockartigen Verkrampfung vermieden werden. Im zweiten Betäubungsabschnitt $t_1$ bis $t_2$ erfolgt eine Aktivitätsberuhigung des Tieres, die dabei hilft, eine gute Betäubungstiefe zu erreichen. Im daran anschließenden Betäubungsabschnitt $t_2$ bis $t_3$ wird dann die Betäubung des im vorausgehenden Betäubungsabschnitt beruhigten Tieres verstärkt. Diese Betäubungsphase sichert eine gute Nachbetäubungszeit, das heißt, eine ausreichende lange Nachwirkung des Betäubungszustandes, innerhalb dessen das Abstechen und Ausbluten passieren soll. Diese Nachbetäubungszeit soll deshalb möglichst lang sein. Im nächsten Betäubungsabschnitt $t_3$ bis $t_4$ erfolgt eine weitere Aktivitätsentspannung des betäubten Tieres, und im letzten Betäubungsabschnitt $t_4$ bis $t_5$ schließlich wird eine allmähliche Entkrampfung des Tieres durchgeführt.

Vorzugsweise beträgt die Gesamtdauer der Betäubungszeit 1,8 s, und die einzelnen Betäubungsabschnitte können beispielsweise folgende Zeitlängen haben:

$t_0$ bis $t_1$: 10%
$t_1$ bis $t_2$: 35%
$t_2$ bis $t_3$: 5%     } der Gesamtdauer des Betäubungsvorganges
$t_3$ bis $t_4$: 30%
$t_4$ bis $t_5$: 20%

Bei einer bevorzugten Ausführungsform treten im Spannungsprofil gemäß Fig. 4 folgende Spannungen auf:

$U_1 = 150\,V$
$U_2 = 250\,V$
$U_3 = 550\,V$
$U_4 = 180\,V$.

Bei der bevorzugten Ausführungsform, bei welcher das Spannungsprofil von dem individuellen elektrischen Widerstand des einzelnen Tieres abhängig gemacht wird, stellen diese Spannungswerte Beispiele für Maximalwerte dar. Ist der gemessene Tierwiderstand beispielsweise größer als 700 Ohm, weist das Spannungsprofil diese maximalen Spannungswerte auf. Bei geringerem Tierwiderstand werden die einzelnen Spannungswerte des Betäubungsspannungsprofils beispielsweise folgendermaßen abgesenkt:

**0 060 527**

| Gemessener Tierwiderstand | Prozentualwert der maximalen Spannungswerte |
|---|---|
| 700 Ohm oder mehr: | 100% $U_{max}$ |
| 600 Ohm: | 80% $U_{max}$ |
| 500 Ohm: | 70% $U_{max}$ |
| 400 Ohm: | 60% $U_{max}$ |
| 350 Ohm: | 50% $U_{max}$ |

Zu dieser Aufstellung ist zu bemerken, daß Schweine einen wesentlich kleineren elektrischen Widerstand haben als Menschen.

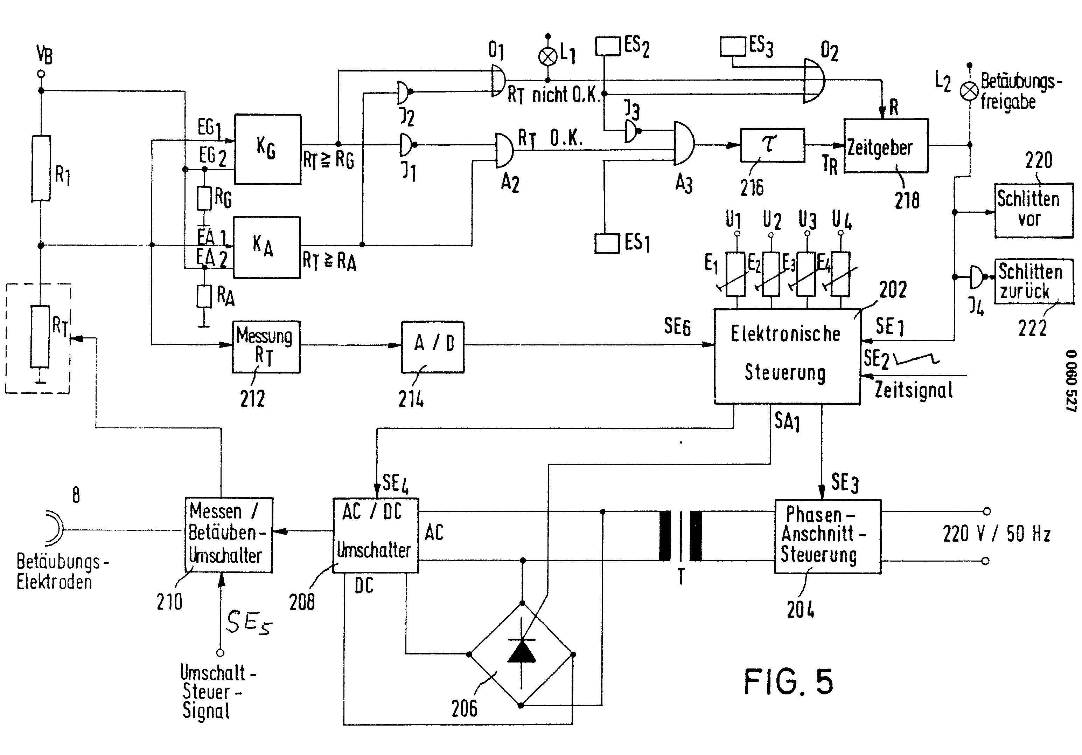

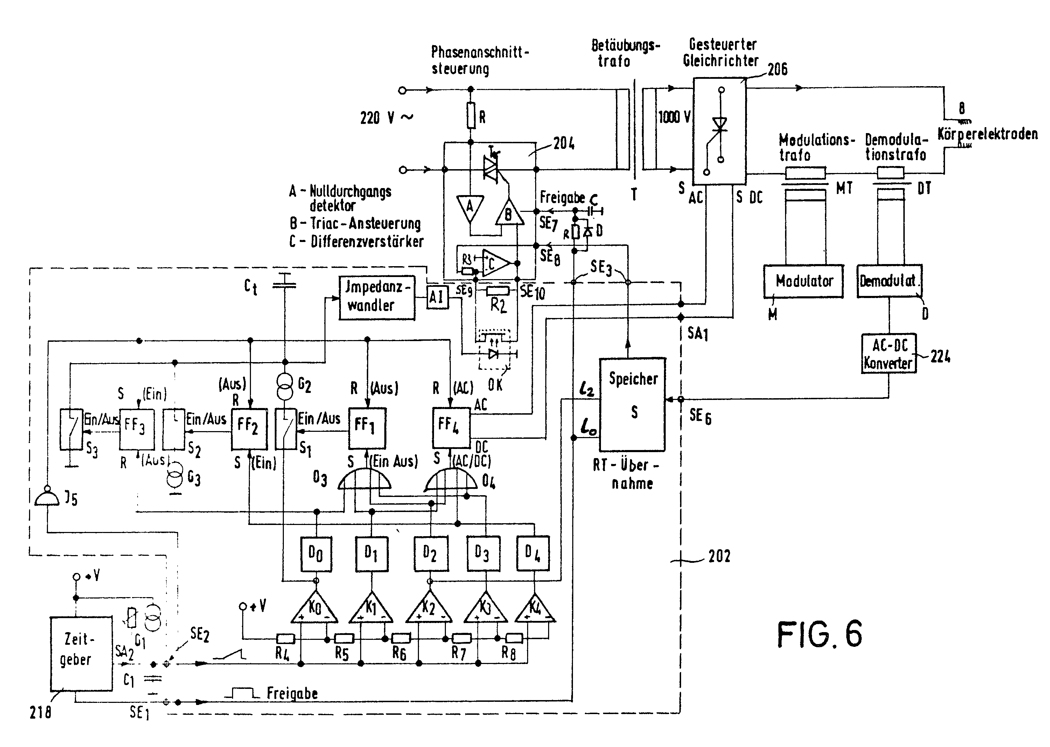

Eine elektrische Schaltung zur Erzeugung eines derartigen Spannungsprofils, vorzugsweise mit Dosierung der Betäubungsspannung in Abhängigkeit vom gemessenen Tierwiderstand, ist in Fig. 5 in Form eines Block- und Logik-Schaltbildes gezeigt. Wie das Betäubungsspannungsprofil aussieht, wird von einer elektronischen Steuerung 202 bestimmt, die weiter unten anhand von Fig. 6 noch ausführlicher erläutert wird. Diese elektronische Steuerung 202 veranlaßt, daß an die Elektroden 8 eine Betäubungsspannung mit dem in Fig. 4 dargestellten Profil angelegt und dieses Profil je nach dem gemessenen Tierwiderstand mehr oder weniger komprimiert wird. Wann diese elektronische Steuerung 202 die Abgabe der Betäubungsspannung auslösen soll und wann sie spätestens die Beendigung des Betäubungsvorgangs auslösen soll, wird ihr über einen Steuereingang $SE_1$ vorgegeben. Über einen Steuereingang $SE_2$ wird ihr ein Zeitsteuerungssignal zugeführt, von dem die Betäubungszeitdauer abhängt, falls der Betäubungsvorgang nicht durch entsprechende Signalgabe über den Steuereingang $SE_1$ vorzeitig abgebrochen wird.

Die den Betäubungselektroden 8 zugeführte Betäubungsspannung wird einem Betäubungstransformator T entnommen, der primärseitig über eine Phasenanschnittsteuerschaltung 204 an eine Netzspannungsquelle von beispielsweise 220 V/50 Hz angeschlossen ist. Die Phasenanschnittsteuerschaltung 204 wird über einen Steuereingang $SE_3$ von der elektronischen Steuerung 202 gesteuert. Der Betrag der vom Betäubungstransformator T sekundärseitig abgegebenen Wechselspannung hängt von dem über den Steuereingang $SE_3$ zugeführten Spannungswertsteuersignal ab.

An die Sekundärseite des Betäubungstransformators T ist eine Gleichrichterschaltung 206 angeschlossen, die bei der dargestellten Ausführungsform als eine mit steuerbaren Gleichrichtern, beispielsweise Thyristoren aufgebaute Vollwellengleichrichterschaltung dargestellt ist. Die Steuerelektroden der vier steuerbaren Gleichrichter dieser Gleichrichterschaltung, von denen in Fig. 5 lediglich einer symbolisch dargestellt ist, sind mit einem Steuerausgang $SA_1$ der elektronischen Steuerung 202 verbunden. Auf diese Weise kann die von der Gleichrichterschaltung erzeugte Gleichspannung bei Bedarf hinsichtlich ihres Spannungswertes unabhängig oder zusätzlich zur Phasenanschnittsteuerschaltung 204 gesteuert werden, beispielsweise ganz abgeschaltet werden.

Die auf der Sekundärseite des Betäubungstransformators T auftretende Wechselspannung und die am Ausgang der Gleichrichterschaltung 206 verfügbare Gleichspannung werden je einem Eingang eines Wechselspannung/Gleichspannung-Umschalters 208 zugeführt, dessen Schaltstellung über einen Steuereingang $SE_4$ von der elektronischen Steuerung 202 bestimmt wird. Die am Ausgang des Wechselspannung/Gleichspannung-Umschalters verfügbare Betäubungsspannung ist dann je nach Stellung des Wechselspannung/Gleichspannung-Umschalters 208 eine Gleich- oder eine Wechselspannung, und deren Spannungswert hängt von der Ansteuerung der Phasenanschnitt-Steuerschaltung 204 und/oder der Gleichrichterschaltung 206 ab. Der Wechselspannung/Gleichspannung-Umschalter ist vorzugsweise als elektronischer Schalter ausgebildet.

Gleiches gilt für einen Messen/Betäuben-Umschalter 210, mit dessen Hilfe die Betäubungselektroden 8 entweder mit der am Ausgang des Wechselspannung/Gleichspannung-Umschalters 208 verfügbaren Betäubungsspannung beaufschlagt oder mit einer Widerstandsmeßschaltung verbunden sind. Dem Messen/Betäuben-Umschalter 210 wird über einen Steuereingang $SE_5$ ein Umschaltsteuersignal zugeführt, mit dessen Hilfe bestimmt werden kann, wann der zwischen den Betäubungselektroden 8 vorhandene Widerstand gemessen und wann an die Betäubungselektroden 8 eine Betäubungsspannung anlegbar gemacht wird. Bei der bevorzugten Ausführungsform, bei welcher aus Sicherheitsgründen nicht nur vor, sondern periodisch auch während des Betäubungsvorgangs jeweils der Widerstand zwischen den Betäubungselektroden 8 gemessen wird, kann der Messen/Betäuben-Umschalter 210 durch ein entsprechendes Umschaltsteuersignal beispielsweise alle 10 ms für die Dauer von 1 ms in die Widerstandsmeßstellung gebracht werden.

Befindet sich der Messen/Betäuben-Umschalter 210 in Widerstandsmeßschaltung, bildet der zwischen den Betäubungselektroden 8 vorhandene Widerstand $R_T$ einen Spannungsteiler mit einem

9

Widerstand $R_1$. Diese Spannungsteilerschaltung aus $R_T$ und $R_1$ befindet sich zwischen einer Spannungsquelle $V_B$ und einem Masseanschluß. Während des Widerstandsmeßvorgangs tritt am Spannungsteilerpunkt eine Meßspannung auf, die ein Maß für den jeweiligen Widerstand $R_T$ ist. Dieser Spannungswert wird einer Widerstandsbestimmungsschaltung 212 zugeführt und von dieser in Richtung zur elektronischen Steuerung 202 weitergegeben. Bei einer bevorzugten Ausführungsform der Betäubungsvorrichtung ist die elektronische Steuerung 202 als Digitalschaltung ausgebildet, und deswegen ist der Widerstandsbestimmungsschaltung 212 ein Analog/Digital-Wandler 214 nachgeordnet, an dessen Ausgang der gemessene Widerstandswert in binär kodierter Form verfügbar ist. Über einen Steueranschluß $SE_6$ kann dieser kodierte Widerstandswert auf die elektronische Steuerung 202 gegeben werden.

Die dem Widerstand $R_T$ proportionale Teilerspannung wird außerdem sowohl einem Ansprechwertkomparator $K_A$ als auch einem Grenzwertkomparator $K_G$ zugeführt. Jeder der beiden Komparatoren vergleicht die einem Eingang $EG_1$ bzw. $EA_1$ zugeführte Teilerspannung mit einer über einen zweiten Eingang $EG_2$ bzw. $EA_2$ zugeführten Bezugsspannung, die von einem Grenzwiderstand $R_G$ bzw. einem Ansprechwiderstand $R_A$ abgenommen wird. Der Ansprechwiderstand $R_A$ hat vorzugsweise einen Widerstandswert von 100 Ohm, während der Grenzwiderstand $R_G$ vorzugsweise einen Widerstandswert von 1550 Ohm aufweist. Dieser Wert des Grenzwiderstandes $R_G$ liegt einerseits sehr weit unter dem elektrischen Widerstand von Menschen, andererseits ausreichend weit unter dem Exitus-Widerstand der Schlachttiere.

Bei der hier betrachteten Logikschaltung soll am Ausgang des Grenzwertkomparators $K_G$ dann der Logikwert »1« auftreten, wenn der Wert des Widerstandes $R_T$ mindestens so groß ist wie derjenige des Grenzwiderstandes $R_G$. Andererseits soll am Ausgang des Ansprechwertkomparators $K_A$ der Logikwert »1« dann auftreten, wenn der Wert des Widerstandes $R_T$ mindestens so groß ist wie derjenige des Ansprechwiderstandes $R_A$. Von den beiden Eingängen einer UND-Verknüpfungsschaltung $A_2$ ist einer über einen Inverter $I_1$ mit dem Ausgang des Grenzwertkomparators $K_G$ und der andere direkt mit dem Ausgang des Ansprechwertkomparators $K_A$ verbunden. Am Ausgang der UND-Verknüpfungsschaltung $A_2$ tritt das Signal »Tierwiderstand in Ordnung« in Form des Logikwertes »1« demnach nur auf, wenn der zwischen den Betäubungselektroden 8 vorhandene Widerstand $R_T$ im Bereich von 100 Ohm bis 1550 Ohm liegt.

Die Ausgänge der beiden Komparatoren $K_G$ und $K_A$ sind außerdem direkt bzw. über einen Inverter $I_2$ mit den beiden Eingängen einer ODER-Verknüpfungsschaltung $O_1$ verbunden, an deren Ausgangsanschluß dann der Logikwert »1« auftritt, wenn der Wert des Widerstands $R_T$ unter dem Wert des Ansprechwiderstandes $R_A$ liegt oder den Wert des Grenzwiderstandes $R_G$ erreicht oder überschreitet. Dieser als Fehlersignal verwendbare Logikwert »1« am Ausgang der ODER-Verknüpfungsschaltung $O_1$ zeigt an, daß entweder ein als Kurzschluß definierter Fall vorliegt oder ein derart hoher Widerstand vorliegt, daß man sich im Bereich des menschlichen elektrischen Widerstandes befindet oder mindestens kurz vor dem Exitus-Widerstand eines Tieres. Dieser Fehlerzustand kann mit Hilfe eines Leuchtelementes $L_1$, beispielsweise einer Lampe oder einer Licht emittierenden Diode, angezeigt werden.

Der Ausgang der UND-Verknüpfungsschaltung $A_2$ ist mit einem von drei Eingängen einer UND-Verknüpfungsschaltung $A_3$ verbunden. Ein zweiter Eingang dieser UND-Verknüpfungsschaltung $A_3$ ist mit einem Elektrodenmindestwinkelschalter $ES_1$ verbunden, von dem dann der Logikwert »1« geliefert wird, wenn die Elektroden aus ihrer unbeeinflußten Stellung in eine bestimmte Mindestwinkelstellung von beispielsweise 15° verschwenkt worden sind. Ein dritter Eingang der UND-Verknüpfungsschaltung $A_3$ ist über einen Inverter $I_3$ mit einem Elektrodenendwinkelschalter verbunden, von dem der Logikwert »1« dann geliefert wird, wenn die Elektroden bis zu einem bestimmten Endwinkel von beispielsweise 30° oder darüber hinaus verschwenkt worden sind. Am Ausgang der UND-Verknüpfungsschaltung $A_3$ steht das von der UND-Verknüpfungsschaltung $A_2$ gelieferte Signal »Widerstand in Ordnung« nur dann zur Verfügung, wenn die Elektroden mindestens in den Mindestwinkel verschwenkt worden sind, den Endwinkel jedoch noch nicht erreicht haben.

Bevor das Signal »Widerstand in Ordnung« vom Ausgang der UND-Verknüpfungsschaltung $A_3$ auf den Triggereingang TR einer Zeitgeberschaltung 218, vorzugsweise in Form einer monostabilen Kippschaltung, gegeben wird, wird es mittels einer Verzögerungsschaltung 216 für eine Zeitdauer von vorzugsweise 1 bis 2 s verzögert. Damit wird vermieden, daß der Betäubungsvorgang bereits bei der ersten Berührung zwischen Schlachttier und Elektroden freigegeben wird, zu einem Zeitpunkt also, zu dem die Elektroden noch nicht sicher am Kopf des Schlachttieres anliegen. Die Verzögerungsschaltung 216 ist jedoch so ausgelegt, daß sie lediglich den Übergang vom Logikwert »0« zum Logikwert »1« verzögert, das heißt, den Beginn des Signals »Widerstand in Ordnung«, daß sie jedoch den Übergang vom Logikwert »1« zum Logikwert »0« ohne Verzögerung weitergibt. Das heißt, die Beendigung des Zustandes »Widerstand in Ordnung«, die beispielsweise durch Kurzschluß zwischen den Betäubungselektroden 8 oder durch ein Ansteigen des Widerstandes $R_T$ zwischen den Betäubungselektroden 8 über den Grenzwiderstandswert verursacht werden kann, wird unverzögert weitersignalisiert.

Beim Empfang des verzögerten Signals »Widerstand in Ordnung« am Triggereingang TR der Zeitgeberschaltung 218 gibt diese ein Betäubungsfreigabesignal vorbestimmter Zeitlänge ab. Dieses wird über den Steuereingang $SE_1$ auf die elektronische Steuerung 202 gegeben und gibt für die Dauer seines Vorhandenseins die Betäubungsspannung frei.

Bei der in Fig. 5 dargestellten Ausführungsform wird das Betäubungsfreigabesignal außerdem zur Anzeige des Freigabezustandes mit Hilfe eines Leuchtelementes $L_2$, wie einer Lampe oder einer lichtemittierenden Diode, sichtbar gemacht. Außerdem wird das Betäubungsfreigabesignal zur Bewegungssteuerung des Elektrodenschlittens 7 verwendet. Zu diesem Zweck wird das Betäubungsfreigabesignal auf ein Magnetventil 220 zur Auslösung der Schlittenvorwärtsbewegung und über einen Inverter $I_4$ auf ein Magnetventil 222 zur Auslösung der Schlittenrückwärtsbewegung gegeben. Diese Magnetventile steuern den Fluidzufluß zu dem pneumatischen oder hydraulischen Antriebszylinder 10 für die Schlittenbewegung. Wenn das Betäubungsfreigabesignal (in Form des Logikwertes »1«) nicht vorliegt, wird der Schlitten über das Magnetventil 222 entgegengesetzt zur Tierförderrichtung in seine Anfangsstellung zurückbewegt, wenn er sich nicht ohnehin schon in dieser Anfangsstellung befindet. Solange jedoch das Betäubungsfreigabesignal vorhanden ist, wird der Schlitten über das Magnetventil 220 in Förderrichtung vorwärts bewegt, und zwar mit Fördergeschwindigkeit.

Die Zeitgeberschaltung 218 weist einen Rücksetzanschluß R auf, bei dessen Beaufschlagung mit einem Rücksetzsignal die Zeitgeberschaltung 218 in den Ruhezustand zurückversetzt wird. Wenn während der Abgabe des Betäubungsfreigabesignals das Rücksetzsignal zugeführt wird, wird das Betäubungsfreigabesignal beendet. Mit dem Rücksetzeingang R der Zeitgeberschaltung 218 ist der Ausgang einer ODER-Verknüpfungsschaltung $O_2$ verbunden, die drei Eingänge aufweist. Einer dieser Eingänge ist mit dem Ausgang der ODER-Verknüpfungsschaltung $O_1$ verbunden, und ein zweiter Eingang der ODER-Verknüpfungsschaltung $O_2$ ist mit dem Endwinkelschalter $ES_2$ verbunden. Der dritte Eingang der ODER-Verknüpfungsschaltung $O_2$ ist mit dem Endlagenschalter $ES_3$ verbunden, der mit einem Logikwert »1« das Eintreffen des Elektrodenschlittens 7 in einer Endlage signalisiert. Über den Rücksetzeingang R wird ein gerade vorhandenes Betäubungsfreigabesignal abgebrochen, wenn ein Fehlersignal am Ausgang der ODER-Verknüpfungsschaltung $O_1$ anzeigt, daß der Widerstand zwischen den Betäubungselektroden 8 nicht mehr in Ordnung ist und/oder wenn der Endwinkelschalter $ES_2$ signalisiert, daß die Betäubungselektroden 8 bis zum Endwinkel verschwenkt sind und/oder wenn der Endlagenschalter $ES_3$ signalisiert, daß der Elektrodenschlitten 7 bis in die Endlage vorbewegt ist. In allen diesen Fällen bewirkt der Abbruch des Betäubungsfreigabesignals, daß die elektronische Steuerung 202 den Betäubungsvorgang abbricht.

Die Funktionsweise der in Fig. 5 dargestellten Block- und Logik-Schaltung ist im wesentlichen folgende:

Bevor ein zu betäubendes Tier mit den Betäubungselektroden 8 in Berührung kommt, befindet sich der Messen/Betäuben-Umschalter 210 in Meßstellung und wird im Normalfall ein Widerstand unendlich zwischen den Betäubungselektroden 8 festgestellt. Da einerseits der Grenzwiderstand $R_G$ überschritten ist, andererseits die Betäubungselektroden 8 noch nicht in den Anfangswinkel verschwenkt sind, kann die Zeitgeberschaltung 218 nicht für Abgabe eines Betäubungsfreigabesignals getriggert werden. Außerdem wird die Zeitgeberschaltung 218 im Rücksetzzustand gehalten, da am Ausgang der ODER-Verknüpfungsschaltung $O_1$ ein Fehlerzustand signalisiert wird. Die elektronische Steuerung 202 kann somit keinen Betäubungsvorgang freigeben.

Kommt nun ein zu betäubendes Tier mit den Betäubungselektroden 8 in Berührung, ergibt die Widerstandsmessung zwischen den Betäubungselektroden 8 einen Widerstandswert im als »in Ordnung« betrachteten Widerstandsbereich, so daß am Ausgang der ODER-Verknüpfungsschaltung $O_1$ kein Fehlersignal mehr vorhanden ist und die Rücksetzung der Zeitgeberschaltung 218 aufgehoben wird. Sobald das unter den zunächst noch nicht vorwärtsbewegten Elektroden hindurchgeförderte Schlachttier die Betäubungselektroden 8 bis zum Mindestwinkel verschwenkt hat, kann das Signal »Widerstand in Ordnung« die UND-Verknüpfungsschaltung $A_3$ passieren und nach der Verzögerung durch die Verzögerungsschaltung 216 die Zeitgeberschaltung 218 zur Abgabe des Betäubungsfreigabesignals veranlassen. Inzwischen ist der elektronischen Steuerung 202 über den Steuereingang $SE_6$ bereits der gemessene Widerstand in kodierter Form gemeldet worden. Die elektronische Steuerung 202 kann daher den Betäubungsvorgang und das dem gemessenen Tierwiderstand entsprechende Betäubungsprofil veranlassen, indem sie die Phasenschnittsteuerung 204, die Gleichrichterschaltung 206 und den Wechselspannung/Gleichspannung-Umschalter 208 entsprechend beeinflußt. Während des nun ablaufenden Betäubungsvorgangs wird durch periodisches Umschalten des Messen/Betäuben-Umschalters 210 die Betäubungsspannung zum Zweck der Widerstandsmessung periodisch unterbrochen. Der Betäubungsvorgang wird beendet, sobald das von der Zeitgeberschaltung 218 abgegebene Betäubungsfreigabesignal zu Ende ist, oder vor diesem Zeitpunkt, wenn entweder eine Widerstandsmessung zeigt, daß der Widerstand nicht mehr in Ordnung ist, oder wenn der Elektrodenendwinkel oder die Schlittenendlage erreicht sind oder wenn mehrere dieser Kriterien erfüllt sind. Da die Betäubungselektroden 8 dann, wenn der Elektrodenschlitten nicht mehr mit dem geförderten Tier mitbewegt wird, durch den Rücken des sich unter den Elektroden vorbeibewegenden Tieres noch weiter verschwenkt werden, ist ein nächster Betäubungsvorgang erst wieder möglich, nachdem die Betäubungselektroden 8 wieder zurückgeschwenkt sind. Eine mehrfache Betäubung desselben Tieres wird daher sicher vermieden.

Die Maximalspannungswerte $U_1$ bis $U_4$ des Betäubungsspannungsprofils werden mittels der elektronischen Steuerung 202 zugeordneten Einstellgliedern $E_1$ bis $E_4$ eingestellt.

Die elektronische Steuerung steuert folgende Funktionen:

0 060 527

1. Sie bestimmt die Zeitpunkte $t_0$ bis $t_5$;
2. sie bestimmt, ob die Betäubungsspannung in einem bestimmten Betäubungsabschnitt eine Wechselspannung oder eine Gleichspannung sein soll;
3. sie bestimmt den jeweiligen Momentanwert der Betäubungsspannung; und
4. sie bestimmt, wie stark das Spannungsprofil in Abhängigkeit von dem jeweiligen individuellen Tierwiderstand komprimiert wird.

Eine bevorzugte Ausführungsform für die elektronische Steuerung 202 wird nun anhand der Fig. 6 erläutert. Und zwar erfolgt die Erläuterung für eine Ausführungsform, bei der das Betäubungsspannungsprofil in Abhängigkeit von der Messung des Widerstandes zwischen den Betäubungselektroden individuell für jedes zu betäubende Schlachttier eingestellt wird, wobei die Widerstandsmessung kontinuierlich durchgeführt wird. Der in Fig. 6 gestrichelt umrandete Teil entspricht im wesentlichen der elektronischen Steuerung 202 in Fig. 5.

Bei der in Fig. 6 dargestellten Ausführungsform ist der Primärseite des Betäubungstransformators T eine integrierte Phasenanschnittsteuerung 204 vorgeschaltet, die in bekannter und daher nicht näher erläuterter Weise einen Triac Tr, eine Triac-Ansteuerung B, einen Nulldurchgangsdetektor A und einen Differenzverstärker C umfaßt. Die Triac-Ansteuerung B weist einen Freigabesteueranschluß $SE_7$ und einen Phasenanschnittsteueranschluß $SE_8$ auf. Weitere Steueranschlüsse $SE_9$ und $SE_{10}$ sind von einer Parallelschaltung aus einem Widerstand $R_2$ und einem Fototransistor eines Optokopplers OK überbrückt.

Sekundärseitig ist der Betäubungstransformator T mit einer gesteuerten Gleichrichterschaltung 206 verbunden, die Steueranschlüsse $S_{AC}$ und $S_{DC}$ aufweist, in Abhängigkeit von deren Beaufschlagung mit Steuersignalen die gesteuerte Gleichrichterschaltung 206 ausgangsseitig Wechselspannung oder Gleichspannung abgibt.

Zwischen den Ausgang der gesteuerten Gleichrichterschaltung 206 und die Betäubungselektroden 8 sind ein Modulationstransformator MT und ein Demodulationstransformator DT geschaltet, mit denen eine kontinuierliche Messung des zwischen den Betäubungselektroden vorhandenen Widerstandes möglich ist. Über einen Modulator M wird dem Betäubungstransformator MT ein Widerstandsmeßsignal zugeführt, das eine Frequenz aufweist, die von derjenigen der Netzwechselspannung deutlich verschieden ist. Beispielsweise wird eine Meßwechselspannung mit einer Frequenz von 20 kHz verwendet. Die Stromstärke des über den Modulationstransformator MT eingespeisten Widerstandswechselspannungsmeßsignals hängt von dem Widerstand zwischen den Betäubungselektroden 8 ab und kann über den Demodulationstransformator DT ausgekoppelt und zu einem Demodulator D geführt werden. In diesem wird die Widerstandsmeßwechselspannung ausgefiltert, um sie von dem Betäubungsspannungsanteil, der auf der Primärseite des Demodulationstransformators DT vorhanden ist, zu trennen. Das Ausgangssignal des Demodulators D wird einem Wechselspannung/Gleichspannung-Wandler 224 zugeführt, an dessen Ausgang ein dem gemessenen Widerstand entsprechendes Gleichspannungssignal verfügbar ist. Dieses wird über den Anschluß $SE_6$ einem Speicher S zugeführt, in dem der Widerstandsmeßwert gespeichert und während der Dauer seiner Speicherung für den Phasensteueranschluß $SE_8$ der Phasenanschnittsteuerschaltung 204 verfügbar gemacht wird. Der Speicher S weist zwei Einlesesteueranschlüsse $I_0$ und $I_2$. Bei Beaufschlagung eines dieser Einlesesteueranschlüsse mit einem Übernahmesignal wird der am Anschluß $SE_6$ gerade vorhandene Widerstandswert in den Speicher übernommen.

Die Phasenanschnittsteuerschaltung 204 gibt das Einschalten des Triacs Tr nur dann und nur so lange frei, wie ihr das Freigabesignal zugeführt wird, das vom Zeitgeber 218 über den Steueranschluß $SE_1$ an die Steuereinrichtung 202 geliefert wird. Für den Zündzeitpunkt des Triacs Tr und damit für den Phasenanschnittzeitpunkt und Betrag der Betäubungsspannung gibt es zwei Möglichkeiten der Beeinflussung, beide über den Differenzverstärker C. Das den Zündzeitpunkt des Triacs Tr bestimmende Ausgangssignal des Differenzverstärkers C hängt einerseits von dem über den Phasenanschnittsteueranschluß $SE_8$ zugeführten Widerstandswert ab, zum anderen von der Stärke der Rückkopplung zwischen dem −/Eingang und dem Ausgang des Differenzverstärkers C. Zum Erhalt des Spannungsprofils an sich wird die Rückkopplung zwischen Eingang und Ausgang des Differenzverstärkers C beeinflußt, und zwar über den Optokoppler OK; und zur Dehnung oder Komprimierung des über den Optokoppler verursachten Spannungsprofils in Abhängigkeit von dem für jedes Schlachttier individuell gemessenen Widerstand wird der Phasenanschnittsteueranschluß $SE_8$ verwendet, dem der gemessene Widerstandswert vom Speicher S zugeführt wird.

Die Stärke der Rückkopplung zwischen dem Eingang und dem Ausgang des Differenzverstärkers C hängt von dem Widerstand des im Optokoppler OK vorgesehenen Phototransistors ab, der wiederum von der Stärke des von einer lichtemittierenden Diode des Optokopplers OK abgegebenen Lichtes abhängt. Zur Erzeugung des Betäubungsspannungsprofils, beispielsweise der in Fig. 4 gzeigten Art, wird die Intensität des von der lichtemittierenden Diode abgegebenen Lichtes geändert, und zwar über die Spannung, mit der diese lichtemittierende Diode beaufschlagt wird. Im folgenden wird eine Methode zur Erzeugung dieser dem Optokoppler OK zugeführten Steuerspannung erläutert.

Der Zeitgeber 218, mit dessen Hilfe das Freigabesignal erzeugt wird, gibt mit Beginn des Freigabesignals über einen Steuerausgang $SA_2$ die Aufladung eines Kondensators $C_1$ über eine Konstantstrom-

quelle $G_1$ frei. Als Folge davon entsteht über dem Kondensator $C_1$ ein zeitbestimmendes Sägezahnsignal. Dieses wird +/Eingängen von Komparatoren $K_0$ bis $K_4$ zugeführt, deren −/Eingänge an Spannungsteilerpunkte einer Spannungsteiler-Widerstandskette $R_4$ bis $R_8$ angeschlossen sind, mit deren Hilfe für die einzelnen Komparatoren unterschiedliche Ansprechschwellen festgelegt werden. Soll mit der in Fig. 6 gezeigten Steuereinrichtung 202 beispielsweise ein Betäubungsspannungsprofil erzeugt werden, wie es in Fig. 4 gezeigt ist, stellt man die von den Widerständen $R_4$ bis $R_8$ abgreifbaren Spannungswerte so ein, daß der Komparator $K_0$ ein Ausgangssignal zum Zeitpunkt $t_0$ abgibt, der Komparator $K_1$ zum Zeitpunkt $t_1$, der Komparator $K_2$ zum Zeitpunkt $t_2$, der Komparator $K_3$ zum Zeitpunkt $t_3$ und der Komparator $K_4$ schließlich zum Zeitpunkt $t_4$. An den Ausgang des Komparators $K_0$ ist eine Serienschaltung aus einem Schalter $S_1$, einer Konstantstromquelle $G_2$ und einem Ladekondensator $C_t$ angeschlossen. Wenn man nun ein Betäubungsspannungsprofil gemäß Fig. 4 erzeugen will, muß man dafür sorgen, daß der Schalter $S_1$ zu bestimmten Zeiten, nämlich im Zeitabschnitt $t_0$ bis $t_1$ und im Zeitabschnitt $t_2$ bis $t_3$, in den EIN-Zustand gesteuert ist, zu bestimmten anderen Zeiten, nämlich den Zeitabschnitten $t_1$ bis $t_2$ und $t_3$ bis $t_4$, dagegen in den AUS-Zustand gesteuert ist. Damit erreicht man, daß sich der Kondensator $C_t$ während der Zeitabschnitte $t_0$ bis $t_1$ und $t_2$ bis $t_3$ linear auflädt (auch eine nichtlineare Aufladung wäre möglich, wenn man beispielsweise die Ladestromquelle $G_2$ durch einen einfachen Ladewiderstand ersetzt), während der Zeitabschnitte $t_1$ bis $t_2$ und $t_3$ bis $t_4$ jedoch auf einer konstanten Ladespannung bleibt. Die Ladespannung wird der lichtemittierenden Diode des Optokopplers OK über einen Impedanzwandler und einen Analoginverter AI zugeführt und bestimmt über den Phototransistor den Gegenkopplungsgrad des Differenzverstärkers C und damit den Betrag der Betäubungsspannung. Der Impedanzwandler weist einen hohen Eingangswiderstand auf und soll verhindern, daß sich der Kondensator $C_t$ unbeabsichtigt entladen kann, was ein Konstanthalten der Betäubungsspannung in den Zeitabschnitten $t_1$ bis $t_2$ und $t_3$ bis $t_4$ verhindern würde. Der Analoginverter AI ist vorgesehen, um bei zunehmender Ladespannung über dem Kondensator $C_t$ eine abnehmende Gegenkopplung für den Differenzverstärker C und damit eine ansteigende Betäubungsspannung zu erreichen.

Jedem Ausgang der Komparatoren $K_0$ bis $K_4$ ist ein Differenzierglied $D_0$ bis $D_4$ nachgeschaltet, um für bistabile Kippschaltungen $FF_1$ bis $FF_4$, vorzugsweise in Form von Flipflops, zu denjenigen Zeitpunkten Ansteuerimpulse bereitzustellen, zu denen das zeitgebende Sägezahnsignal die Ansprechschwellenwerte der einzelnen Komparatoren überschreitet und an deren Ausgang einen Spannungswechsel verursacht, beispielsweise entsprechend einem Übergang vom Logikwert »0« zum Logikwert »1«.

Mit Hilfe der bistabilen Kippschaltungen $FF_1$ bis $FF_3$ werden der den Ladevorgang des Ladekondensators $C_t$ auslösende Schalter $S_1$, ein die gezielte Entladung des Ladekondensators $C_t$ auslösender Schalter $S_2$ und ein die Ladung des Ladekondensators $C_t$ kurzschließender Schalter $S_3$ gesteuert. Zu diesem Zweck ist der Schalter $S_2$ zwischen dem Ladekondensator $C_t$ und eine Entladestromquelle $G_3$, die anderen Endes mit Masse verbunden ist, geschaltet, während der Schalter $S_3$ zwischen der nicht mit Masse verbundenen Seite des Ladekondensators $C_t$ und Masse liegt.

Als den Schalter $S_1$ steuernde bistabile Kippschaltung $FF_1$ wird ein Flipflop verwendet, das jedes Mal beim Eintreffen eines Ansteuerimpulses am Setzeingang S in den jeweils anderen Schaltzustand übergeht, wobei über den Rücksetzanschluß R dafür gesorgt ist, daß der Schalter $S_1$ bis zum Beginn der Betäubungsfreigabe ausgeschaltet ist. Dem Setzeingang S des Flipflops $FF_1$ ist eine ODER-Schaltung $O_3$ vorgeschaltet, die vier Eingänge aufweist, die bei der dargestellten Ausführungsform mit den Ausgängen der Differenzierglieder $D_0$, $D_1$, $D_2$ und $D_3$ verbunden sind. Wenn die Erzeugung eines anderen Betäubungsspannungsprofils erwünscht ist, muß man natürlich eine ODER-Schaltung $O_3$ mit entsprechend vielen Eingängen mit den Ausgängen der entsprechenden Differenzierglieder verbinden.

Die den Schalter $S_2$ steuernde bistabile Kippschaltung $FF_2$ wird bei der dargestellten Ausführungsform beim Erhalt eines Ausgangsimpulses vom Differenzierglied $D_4$ in den den Schalter $S_2$ in den EIN-Zustand bringenden Schaltzustand gesteuert. Der Rücksetzanschluß des Flipflops $FF_3$ ist mit dem Ausgang des Differenzierglieds $D_0$ verbunden. Das heißt, beim Auftreten eines Impulses am Ausgang des Differenzierglieds $D_0$ wird das Flipflop $FF_3$ in denjenigen Zustand gebracht, in dem es den Schalter $S_3$ in den AUS-Zustand steuert.

Das vom Zeitgeber 218 der Steuereinrichtung 202 über den Steuereingang $SE_1$ zugeführte Freigabesignal wird mit Hilfe eines Inverters $I_5$ invertiert, dessen Ausgang mit den Rücksetzanschlüssen R der Flipflops $FF_1$ und $FF_2$ sowie mit dem Setzeingang S des Flipflops $FF_3$ verbunden ist. Das heißt, solange kein Freigabesignal vorhanden ist, sind die Flipflops $FF_1$ und $FF_2$ in einen Zustand geschaltet, in dem sie den Schalter $S_1$ beziehungsweise $S_2$ in den AUS-Zustand steuern. Das Flipflop $FF_3$ steuert hingegen beim Nicht-Vorliegen des Freigabesignals den Schalter $S_3$ in den EIN-Zustand, so daß der Kondensator $C_t$ vor dem Beginn der Freigabe und nach Beendigung beziehungsweise Abbruch der Freigabe durch Kurzschluß nach Masse entladen beziehungsweise entladen gehalten wird.

Die in Fig. 6 gezeigte Steuereinrichtung 202 weist eine weitere bistabile Kippschaltung, vorzugsweise in Form eines Flipflops $FF_4$, auf, die die gesteuerte Gleichrichterschaltung 206 je nach Schaltzustand zur Abgabe einer Wechselspannung oder einer Gleichspannung als Betäubungsspannung veranlaßt. Zu diesem Zweck sind zwei Ausgänge AC und DC des Flipflops $FF_4$ mit den entsprechenden der Steueranschlüsse $S_{AC}$ beziehungsweise $S_{DC}$ der gesteuerten Gleichrichterschaltung 206 verbunden.

Der Rücksetzanschluß des Flipflops $FF_4$ ist ebenfalls mit dem Ausgang des Inverters $I_5$ verbunden, so daß das Flipflop $FF_4$ bis zum Beginn des Betäubungsvorgangs beziehungsweise vom Ende beziehungsweise Abbruch eines Betäubungsvorgangs ab in einen definierten Schaltzustand versetzt wird. Bei der in Fig. 6 gezeigten Ausführungsform wird das Flipflop $FF_4$ in einen Schaltzustand zurückgesetzt, in dem es die gesteuerte Gleichrichterschaltung 206 zur Abgabe einer Wechselspannung veranlaßt. Dem Setzeingang S des Flipflops $FF_4$ ist eine ODER-Schaltung $O_4$ vorgeschaltet, die in der dargestellten Ausführungsform vier Eingänge aufweist, die mit den Ausgängen der Differenzierglieder $D_1$, $D_2$, $D_3$ und $D_4$ verbunden sind. Das heißt, bei dem dargestellten Ausführungsbeispiel wird zu den Zeitpunkten $t_1$, $t_2$, $t_3$ und $t_4$ eine Umschaltung der Betäubungsspannung von Wechselspannung auf Gleichspannung beziehungsweise umgekehrt veranlaßt.

Wie im Fall des Flipflops $FF_1$ und der ODER-Schaltung $O_3$ kann man auch im Fall des Flipflops $FF_4$ und der ODER-Schaltung $O_4$ eine andere als die dargestellte Verknüpfung zwischen den Ausgangsimpulsen der Differenzierglieder $D_0$ bis $D_4$ vorsehen, wenn man ein anderes Betäubungsspannungsprofil als das in Fig. 4 gezeigte erzeugen möchte.

Besonders vorteilhaft ist es, die den Setzeingängen der Flipflops $FF_1$ und $FF_4$ zugeordneten ODER-Schaltungen $O_3$ beziehungsweise $O_4$ mit so vielen Eingängen auszubilden, wie Komparatoren $K_0$ bis $K_4$ beziehungsweise Differenzierglieder $D_0$ bis $D_4$ vorhanden sind, also diese Setzeingänge S mit den Ausgangssignalen aller Differenzierglieder $D_0$ bis $D_4$ zu verknüpfen, und zwischen die Ausgänge der Differenzierglieder $D_0$ bis $D_4$ und die zugehörigen Eingänge der ODER-Schaltungen $O_3$ und $O_4$ programmierbare Schalter einzufügen. Durch Umprogrammierung der programmierbaren Schalter kann man dann in jedem Betäubungsabschnitt hinsichtlich des Anlegens von Wechselspannung oder Gleichspannung und hinsichtlich einer allmählich ändernden oder konstant bleibenden Betäubungsspannung wählen.

Im folgenden wird die Funktionsweise der in Fig. 6 dargestellten Ausführungsform kurz erläutert:

Solange der Zeitgeber 218 noch nicht das Freigabesignal abgibt, sind die Flipflops $FF_1$, $FF_2$ und $FF_4$ zurückgesetzt und ist das Flipflop $FF_3$ gesetzt, so daß die gesteuerte Gleichrichterschaltung 206 auf die Abgabe von Wechselspannung eingestellt ist und die Schalter $S_1$ und $S_2$ in den AUS-Zustand und der Schalter $S_3$ in den EIN-Zustand gesteuert ist. Zu diesem Zeitpunkt ist die Freigabe der Zündung des Triacs Tr der Phasenanschnittsteuerschaltung 204 noch nicht erfolgt, so daß die Betäubungselektroden 8 nicht mit einer Betäubungsspannung beaufschlagt werden.

Wenn der Zeitgeber 218 über seinen Triggeranschluß TR von der Verzögerungsschaltung 216 (Fig. 5) das Signal »Widerstand in Ordnung« erhält und mit der Abgabe des Freigabesignals beginnt, gibt er gleichzeitig über seinen Ausgangsanschluß $SA_2$ (Fig. 6) die Erzeugung des zeitbestimmenden Sägezahnsignals frei. Zu Beginn der Betäubungsfreigabe, das heißt, zum Zeitpunkt $t_0$, ist der Ansprechschwellenwert des Komparators $K_0$ erreicht, so daß am Differenzierglied $D_0$ ein Ausgangsimpuls abgegeben wird, der über das Flipflop $FF_1$ den Schalter $S_1$ in den EIN-Zustand und über das Flipflop $FF_3$ den Schalter $S_3$ in AUS-Zustand steuert. Daher wird der Ladekondensator $C_t$ allmählich aufgeladen und, da das Freigabesignal die Triac-Ansteuerung B freigegeben hat, eine entsprechend ansteigende Betäubungsspannung auf die Betäubungselektroden 8 gegeben. Während dieses Zeitabschnitts befindet sich das Flipflop $FF_4$ noch im Rücksetzzustand, so daß als Betäubungsspannung eine Wechselspannung abgegeben wird.

Zum Zeitpunkt $t_1$ spricht der Komparator $K_1$ an, so daß am Ausgang des Differenzierglieds $D_1$ ein Steuerimpuls erzeugt wird, der die Flipflops $FF_1$ und $FF_4$ kippt, so daß der Schalter $S_1$ geöffnet wird und eine Umschaltung der Betäubungsspannung von Wechselspannung auf Gleichspannung erfolgt. Die Aufladung des Kondensators $C_t$ wird dadurch unterbrochen, so daß eine konstant bleibende Ladespannung über den Optokoppler OK und die Phasenanschnittsteuerschaltung 204 die Abgabe einer konstanten Betäubungsspannung verursacht.

Zum Zeitpunkt $t_2$ erfolgt dann wieder eine Umschaltung der Flipflops $FF_1$ und $FF_4$, so daß der Schalter $S_1$ wieder geschlossen und die gesteuerte Gleichrichterschaltung 206 wieder in den Zustand der Abgabe einer Wechselspannung gebracht wird. Folglich wird vom Zeitpunkt $t_2$ ab eine ansteigende Wechselspannung auf die Betäubungselektroden 8 gegeben.

Zum Zeitpunkt $t_3$ erfolgt wieder eine Umschaltung der Flipflops $FF_1$ und $FF_4$, so daß von diesem Zeitpunkt ab die Betäubungselektroden 8 wieder mit einer konstanten Gleichspannung beaufschlagt werden.

Zum Zeitpunkt $t_4$ nun wird über das Flipflop $FF_4$ die Betäubungsspannung erneut auf Wechselspannung umgeschaltet. Der Schalter $S_1$ bleibt jedoch im AUS-Zustand, weil keiner der Eingänge der ODER-Schaltung $O_3$ mit dem Ausgang des Differenzierglieds $D_4$ verbunden ist. Zum Zeitpunkt $t_4$ wird jedoch das Flipflop $FF_2$ gesetzt, so daß der Schalter $S_2$ in den EIN-Zustand gebracht wird, so daß der Kondensator $C_t$ über die Konstantstromquelle $G_3$ allmählich entladen werden kann. Die Folge ist die Beaufschlagung der Betäubungselektroden 8 mit einer abnehmenden Wechselspannung.

Zum Zeitpunkt $t_5$ ist das Freigabesignal beendet, so daß einerseits der Triac Tr der Phasenanschnittsteuerschaltung 204 nicht mehr gezündet werden kann, andererseits der Schalter $S_3$ über das Flipflop $FF_3$ in den EIN-Zustand gebracht wird, so daß der Kondensator $C_1$ kurzschlußartig entladen wird. Die Flipflops $FF_1$, $FF_2$ und $FF_4$ werden inzwischen wieder in ihre Anfangszustände zurückgesetzt.

**0 060 527**

Möchte man das Betäubungsspannungsprofil von dem gemessenen Tierwiderstand abhängig machen, wie es bei der in Fig. 6 dargestellten Ausführungsform möglich ist, passiert zu dem bereits beschriebenen Funktionsablauf zusätzlich folgendes:
Die Lesesteuereingänge $I_0$ und $I_2$ des Speichers S werden je durch ansteigende Impulsflanken aktiviert. Der Lesesteueranschluß $I_0$ ist mit der das Freigabesignal führenden Leitung verbunden, während der Lesesteueranschluß $I_2$ mit dem Ausgang des Komparators $K_2$ verbunden ist. Daher wird der Speicher zu Beginn der Freigabe zum Übernehmen des am Eingangsanschluß $SE_6$ vorhandenen Widerstandsmeßsignals veranlaßt, woraufhin die Phasenanschnittsteuerschaltung 204 die Betäubungsspannung von dem in den Speicher S gelesenen Widerstandswert abhängig macht. Wenn dann zum Zeitpunkt $t_2$ der Komparator $K_2$ anspricht, wird der Speicher S dazu veranlaßt, den zu diesem Zeitpunkt vorhandenen Widerstandsmeßwert einzulesen, woraufhin die Betäubungsspannung entsprechend dem zum Zeitpunkt $t_2$ eingelesenen Widerstandswert beeinflußt wird.

Es besteht nun wieder die Möglichkeit, einen oder mehrere Lesesteueranschlüsse des Speichers S beispielsweise über eine weitere ODER-Schaltung mit den Ausgängen aller Komparatoren zu verknüpfen und zwischen die Ausgänge der Komparatoren und die Eingänge dieser ODER-Schaltung wieder programmierbare Schalter einzufügen, über deren Programmierung man dann auf einfache Weise die Zeitpunkte, zu denen der Speicherwert des Speichers S aktualisiert werden soll, neu einstellen kann.


**Patentansprüche**

1. Verfahren zum elektrischen Betäuben von Schlachttieren, insbesondere Schweinen, bei dem der Tierkörper über Betäubungselektroden einer Betäubungsspannung ausgesetzt wird, die innerhalb der Betäubungsspannungsbeaufschlagungszeit von einem Anfangswert mit einer Phase allmählichen Anstiegs bis zu einem Höchstwert geändert und danach auf einen Endwert verringert wird, dadurch gekennzeichnet, daß der allmähliche Spannungsanstieg vor Erreichen des Höchstwertes ($U_3$) vorübergehend durch ein Konstanthalten auf einem Zwischenwert ($U_2$) unterbrochen wird.

2. Verfahren nach Anspruch 1, dadurch gekennzeichnet, daß die Betäubungsspannung nach dem Erreichen des Höchstwertes vorübergehend konstant auf diesem Höchstwert gehalten wird.

3. Verfahren nach Anspruch 1 oder 2, dadurch gekennzeichnet, daß die Betäubungsspannung vom Höchstwert aus allmählich auf einen Schlußwert abgesenkt wird, bei dem der Betäubungsvorgang beendet wird.

4. Verfahren zum elektrischen Betäuben von Schlachttieren nach einem oder mehreren der Ansprüche 1 bis 3, dadurch gekennzeichnet, daß dem Betäubungsvorgang eine Messung des zwischen den Betäubungselektroden vorhandenen Widerstandes vorausgeschickt wird.

5. Verfahren nach Anspruch 4, dadurch gekennzeichnet, daß die bei einem Betäubungsvorgang verwendeten Betäubungsspannungswerte individuell für jedes einzelne Tier in Abhängigkeit von dem vor dem Betäubungsvorgang für dieses Tier gemessenen Widerstand eingestellt werden.

6. Verfahren nach einem oder mehreren der Ansprüche 1 bis 5, dadurch gekennzeichnet, daß während des Betäubungsvorgangs mehrfach Widerstandsmessungen durchgeführt werden.

7. Vorrichtung zur elektrischen Betäubung von Schlachttieren, insbesondere Schweinen, mit Betäubungselektroden, über die der Tierkörper einer Betäubungsspannung ausgesetzt ist, mit einem Betäubungsspannungsgenerator und einer hieran angeschlossenen Steuereinrichtung zur Erzeugung einer Betäubungsspannung, die sich innerhalb der Betäubungsspannungsbeaufschlagungszeit von einem Anfangswert mit einer Phase allmählichen Anstiegs bis zu einem Höchstwert ändert und danach auf einen Endwert abfällt, dadurch gekennzeichnet, daß die Steuereinrichtung (202) den Betäubungsspannungsgenerator (T, 204, 206) veranlaßt, den allmählichen Spannungsanstieg vor Erreichen des Höchstwertes ($U_3$) vorübergehend durch Konstanthalten auf einem Zwischenwert ($U_2$) zu unterbrechen.

8. Vorrichtung zur elektrischen Betäubung von Schlachttieren, insbesondere Schweinen, mit Betäubungselektroden, über die der Tierkörper einer Betäubungsspannung ausgesetzt ist, mit einem Betäubungsspannungsgenerator und hieran angeschlossenen Steuereinrichtung zur Erzeugung einer Betäubungsspannung, die sich innerhalb der Betäubungsspannungsbeaufschlagungszeit von einem Anfangswert mit einer Phase allmählichen Anstiegs bis zu einem Höchstwert ändert und danach auf einen Endwert abfällt, dadurch gekennzeichnet, daß die Steuereinrichtung (202) eine Komparatorschaltungsanordnung ($K_0$ bis $K_4$) aufweist, deren einem Eingang (+) ein zeitbestimmendes Sägezahnsignal und deren anderem Eingang (−) eine eine Ansprechschwelle definierende Bezugsspannung zugeführt werden, daß an den Ausgang der Komparatorschaltungsanordnung über eine Schaltereinrichtung ($S_1$ bis $S_3$) und eine Konstantstromquelle ($G_2$) ein Kondensator ($C_t$) angeschlossen ist,
daß die Komparatorschaltungsanordnung ($K_0$ bis $K_4$) zum Zeitpunkt des Beginns ($t_0$) des allmählichen Anstiegs der Betäubungsspannung an die Schaltereinrichtung ($S_1$ bis $S_3$) ein diese in den leitenden EIN-Zustand steuerndes Signal abgibt und zum Zeitpunkt des Endes ($t_1$) des allmählichen Anstiegs der Betäubungsspannung ein die Schaltereinrichtung ($S_1$ bis $S_3$) in den AUS-Zustand steuerndes Signal abgibt, und
daß die Ladespannung des Kondensators ($C_t$) einer Phasenanschnittsteuerschaltung (204) als Phasensteuersignal zugeführt wird.

15

0 060 527

9. Vorrichtung nach Anspruch 8, dadurch gekennzeichnet,
daß die Komparatorschaltungsanordnung mehrere Komparatoren (K₀ bis K₄) aufweist, deren Ansprechschwellenwerte je einem der Beginnzeitpunkte von einzelnen Betäubungsabschnitten (t₀ bis t₅) eines Betäubungsspannungsprofils (Fig. 4) zugeordnet sind,
daß die Schaltereinrichtung einen ersten Schalter (S₁) aufweist, mit dem der Ladevorgang des Kondensators (Cₗ) ein- und ausschaltbar ist, sowie einen zweiten Schalter, über den der Kondensator (Cₗ) an eine Entladestromquellenschaltung (G₃) anschaltbar ist, ferner einen dritten Schalter (S₃), über den die Ladung des Kondensators (Cₗ) kurzschließbar ist, und
daß die einzelnen Schalter (S₁ bis S₃) von den Ausgängen der einzelnen Komparatoren (K₀ bis K₄) über eine erste Ansteuerschaltung (D₀ bis D₄, O₃, FF₁, FF₂, FF₃) so ansteuerbar sind, daß der erste Schalter (S₁) während des ersten und dritten Betäubungsabschnittes (t₀ bis t₁ bzw. t₂ bis t₃) in den EIN-Zustand und während des zweiten und vierten Betäubungsabschnittes (t₁ bis t₂ bzw. t₃ bis t₄) in den AUS-Zustand, der zweite Schalter (S₂) während des letzten Betäubungsabschnitts (t₄ bis t₅) in den EIN-Zustand und der dritte Schalter (S₃) während des Nicht-Vorliegens eines Betäubungsfreigabesignals in den EIN-Zustand gesteuert werden.

10. Vorrichtung zum elektrischen Betäuben von Schlachttieren nach Anspruch 8 oder 9, dadurch gekennzeichnet, daß eine Widerstandsmeßschaltung (212) zur Messung des zwischen den Betäubungselektroden (8) vorhandenen Widerstands (Rₜ) vorgesehen ist.

11. Vorrichtung nach einem oder mehreren der Ansprüche 8 bis 10, bei der die Schlachttiere durch einen Betäubungsförderer in Berührung mit einem Paar in den Förderweg hineinragende, um eine senkrecht zur Förderrichtung verlaufende Achse schwenkbare Betäubungselektroden gebracht und die Betäubungselektroden während ihrer Berührung mit dem geförderten Schlachttier von einer Ausgangs- in eine Endwinkelstellung verschwenkt werden, dadurch gekennzeichnet, daß die Betäubungselektroden (8) bei Verschwenkung in einen Mindestwinkel einen Mindestwinkelschalter (ES₁) und beim Erreichen eines bestimmten Endwinkels einen Endwinkelschalter (ES₂) betätigen, und daß ein von einer Komparatorschaltung (K_G, K_A) geliefertes Signal »Widerstand in Ordnung« nur dann am Ausgang einer Logikschaltung (A₃) auftritt, wenn der Mindestwinkelschalter (ES₁) und der Endwinkelschalter (ES₂) signalisieren, daß der Mindestwinkel erreicht ist, nicht jedoch der Endwinkel.

12. Vorrichtung nach Anspruch 10 oder 11, dadurch gekennzeichnet, daß der von der Widerstandsmeßschaltung (212) gemessene Widerstand in einem Speicher (S) einlesbar ist und daß der gespeicherte Wert der Steuereinrichtung (202) zur Beeinflussung des Betäubungsspannungsverlaufs (Fig. 4) zugeführt wird.

13. Vorrichtung nach Anspruch 12, dadurch gekennzeichnet, daß der Speicher mehrere Einlesesteueranschlüsse (I₀, I₂) aufweist, von denen einer (I₀) mit dem Betäubungsfreigabesignal und der andere (I₂) bzw. die anderen mit einem bzw. mehreren der Ausgänge der Komparatoren (K₀ bis K₄) verbunden ist bzw. sind, wobei der Speicher (S) den gemessenen Widerstandswert zum Beginn der Betäubungsfreigabe und dem dem jeweiligen Komparator (K₀ bis K₄) entsprechenden Beginn des Betäubungsabschnitts bzw. der Betäubungsabschnitte einspeichert.

14. Vorrichtung nach einem oder mehreren der Ansprüche 10 bis 13, dadurch gekennzeichnet, daß in die vom Betäubungsgenerator zu den Betäubungselektroden (8) führende Leitung die Sekundärseite eines Modulationstransformators (MT) und die Primärseite eines Demodulationstransformators (DT) geschaltet sind,
daß der Modulationstransformator (MT) primärseitig mit einem ein Meßwechselspannungssignal aufprägenden Modulator und der Demodulationstransformator (DT) sekundärseitig mit einem die Meßwechselspannung herausfilternden Demodulator verbunden sind, und
daß das vom Demodulator erzeugte Signal der Steuereinrichtung (202) als Widerstandssignal zugeführt wird.

## Claims

1. A method of electrically stunning animals for slaughter, in particular pigs, by which the body of the animal is subjected via stunning electrodes to a stunning voltage which is changed within the time it is applied from an initial level with a phase of gradual increase to the maximum level and then reduced to a final level, characterized in that the gradual voltage increase is temporarily interrupted before reaching the maximum level (U₃) by being kept constant at an intermediate level (U₂).

2. The method as in claim 1, characterized in that the stunning voltage is temporarily kept constant at the maximum level after reaching this maximum level.

3. The method as in claim 1 or 2, characterized in that the stunning voltage is gradually reduced from the maximum level to a final level at which the anesthetizing process is terminated.

4. The method of electrically anesthetizing animals for slaughter as in one or more of claims 1 to 3, characterized in that the stunning process is preceded by measurement of the resistance existing between the anesthetic electrodes.

5. The method as in claim 4, characterized in that the stunning voltages used during an stunning process are individually adjusted for each animal in accordance with the resistance measured for this

16

animal before the stunning process.

6. The method as in one or more of claims 1 to 5, characterized in that resistance measurement is carried out several times during the stunning process.

7. An apparatus for electrically stunning animals for slaughter, in particular pigs, having stunning electrodes via which the body of the animal is subjected to an stunning voltage, a stunning voltage generator and a control means connected thereto for generating an stunning voltage which changes within the time it is applied from an initial level with a phase of gradual increase to a maximum level and then falls to a final level, characterized in that the control means (202) causes the stunning voltage generator (T, 204, 206) to interrupt the gradual voltage increase temporarily, before the maximum level ($U_3$) is reached, by keeping the voltage constant at an intermediate level ($U_2$).

8. An apparatus for electrically stunning animals for slaughter, in particular pigs, having stunning electrodes via which the body of the animal is subjected to an stunning voltage, an stunning voltage generator and a control means connected thereto for generating an stunning voltage which changes within the time it is applied from an initial level with a phase of gradual increase to a maximum level and then falls to a final level, characterized in that the control means (202) exhibits a comparator circuit arrangement ($K_0$ to $K_4$), to one input ($+$) of which a time-determining saw-tooth signal is fed and to the other input ($-$) of which a reference voltage defining a response level is fed, in that a capacitor ($C_t$) is connected to the output of the comparator circuit arrangement via a switch means ($S_1$ to $S_3$) and a constant power source ($G_2$),
in that the comparator circuit arrangement ($K_0$ to $K_4$) gives the switch means ($S_1$ to $S_3$) a signal driving it into the conductive ON state at the time the gradual increase of the stunning voltage begins ($t_0$), and gives a signal driving the switch means ($S_1$ to $S_3$) into the OUT state at the time the gradual increase of the stunning voltage ends ($t_1$),
and in that the charging voltage of the capacitor ($C_t$) is fed to a phase-control circuit (204) as a phasecontrol signal.

9. The apparatus as in claim 8, characterized
in that the comparator circuit arrangement exhibits a plurality of comparators ($K_0$ to $K_4$), the response levels of which are each assigned to one of the beginning times of various stunning periods ($t_0$ to $t_5$) of an stunning voltage profile (Fig. 4),
in that the switch means exhibits a first switch ($S_1$) with which the charging process of the capacitor ($C_t$) can be switched on and off, and a second switch via which the capacitor ($C_t$) can be connected to a discharging current source circuit ($G_3$), further a third switch ($S_3$) via which the charge of the capacitor ($C_t$) can be short-circuited,
and in that the various switches ($S_1$ to $S_3$) can be controlled from the outputs of the various comparators ($K_0$ to $K_4$) via a first control circuit ($D_0$ to $D_4$, $O_3$, $FF_1$, $FF_2$, $FF_3$) in such a way that the first switch ($S_1$) is driven into the ON state during the first and third stunning periods ($t_0$ to $t_1$, and $t_2$ to $t_3$, respectively), and into the OUT state during the second and fourth stunning periods ($t_1$ to $t_2$, and $t_3$ to $t_4$, respectively), the second switch ($S_2$) is driven into the ON state during the last stunning period ($t_4$ to $t_5$) and the third switch ($S_3$) is driven into the ON state during the absence of a stunning release signal.

10. The apparatus for electrically stunning animals for slaughter as in claim 8 or 9, characterized in that a resistance measuring circuit (212) is provided for measuring the resistance ($R_T$) between the stunning electrodes (8).

11. The apparatus as in one or more of claims 8 to 10, in which the animals for slaughter are brought in contact by an stunning conveyer with a pair of stunning electrodes pivoting around an axis extending perpendicularly to the direction of conveyance and protruding into the conveying path, and the stunning electrodes are pivoted from an initial angular position into a final angular position during their contact with the animal for slaughter being conveyed, characterized in that the stunning electrodes (8) activate a minimum angle switch ($ES_1$) when being pivoted into a minimum angle, and activate a final angle switch ($ES_2$) when reaching a certain final angle, and in that a signal »resistance O.K.« delivered by a comparator circuit ($K_G$, $K_A$) occurs at the output of a logic circuit ($A_3$) only when the minimum angle switch ($ES_1$) and the final angle switch ($ES_2$) signalize that the minimum angle is reached but not the final angle.

12. The apparatus as in claim 10 or 11, characterized in that the resistance measured by the resistance measuring circuit (212) may be read into a memory (S) and in that the stored value is fed to the control means (202) in order to influence the stunning voltage patern (Fig. 4).

13. The apparatus as in claim 12, characterized in that the memory exhibits a plurality of reading control connections ($I_0$, $I_2$), one ($I_0$) of which is connected with the stunning release signal and the other ($I_2$) or others of which is/are connected with one/several of the outputs of the comparators ($K_0$ to $K_4$), the memory (S) storing the measured resistance value at the beginning of the stunning release and at the beginning of the stunning period(s) corresponding to the particular comparator ($K_0$ to $K_4$).

14. The apparatus as in one or more of claims 10 to 13, characterized in that the secondary side of a modulation transformer (MT) and the primary side of a demodulation transformer (DT) are switched into the line leading from the stunning generator to the stunning electrodes (8),
in that the modulation transformer (MT) is connected on the primary side with a modulator impressing a measuring alternating voltage signal, and the demodulation transformer (DT) is connected on the secondary side with a demodulator filtering out the measuring alternating voltage, and in that the signal generated by the demodulator is fed to the control means (202) as a resistance signal.

## Revendications

1. Procédé d'électroanesthésie d'animaux de boucherie, et notamment de porcs, dans lequel le corps de l'animal est soumis par des électrodes à une tension d'anesthésie qui, pendant sa durée d'application, varie entre une valeur initiale et une valeur maximale, avec une phase de croissance progressive, puis est réduite à une valeur finale, ledit procédé étant caractérisé en ce que la croissance progressive de la tension est temporairement interrompue, avant d'atteindre la valeur maximale ($U_3$), par stabilisation à une valeur intermédiaire ($U_2$).

2. Procédé selon revendication 1, caractérisé en ce que la tension d'anesthésie, quand elle a atteint la valeur maximale, est maintenue temporairement constante à ladite valeur.

3. Procédé selon une des revendications 1 ou 2, caractérisé en ce que la tension d'anesthésie est progressivement réduite de la valeur maximale à une valeur finale, à laquelle l'opération d'anesthésie prend fin.

4. Procédé d'électroanesthésie d'animaux de boucherie selon une quelconque des revendications 1 à 3, caractérisé en ce que l'opération d'anesthésie est précédée par une mesure de la résistance présente entre les électrodes d'anesthésie.

5. Procédé selon revendication 4, caractérisé en ce que les valeurs de la tension utilisée pour une opération d'anesthésie sont ajustées individuellement pour chaque animal en fonction de sa résistance mesurée avant l'opération d'anesthésie.

6. Procédé selon une quelconque des revendications 1 à 5, caractérisé par des mesures répétées de résistance pendant l'opération d'anesthésie.

7. Dispositif d'électroanesthésie d'animaux de boucherie, et notamment de porcs, comportant des électrodes appliquant une tension d'anesthésie au corps de l'animal, un générateur de tension d'anesthésie et un dispositif de commande, relié audit générateur pour la production d'une tension d'anesthésie qui, pendant sa durée d'application, varie d'une valeur initiale à une valeur maximale, avec une phase de croissance progressive, puis est réduite à une valeur finale, ledit dispositif étant caractérisé en ce que le dispositif de commande (202) conduit le générateur de tension d'anesthésie (T, 204, 206) à interrompre temporairement la croissance progressive de la tension, avant d'atteindre la valeur maximale ($U_3$), par stabilisation à une valeur intermédiaire ($U_2$).

8. Dispositif d'électroanesthésie d'animaux de boucherie, et notamment de porcs, comportant des électrodes appliquant une tension d'anesthésie au corps de l'animal, un générateur de tension d'anesthésie et un dispositif de commande relié audit générateur pour produire une tension d'anesthésie qui, pendant sa durée d'application, varie d'une valeur initiale à une valeur maximale, avec une phase de croissance progressive, puis est réduite à une valeur finale, ledit dispositif étant caractérisé en ce que le dispositif de commande (202) comprend un circuit comparateur ($K_0$ à $K_4$), dont une entrée (+) reçoit un signal en dents de scie déterminant le temps et l'autre entrée (—) une tension de référence définissant un seuil de réponse;
un condensateur ($C_t$) est relié à la sortie du circuit comparateur par un dispositif interrupteur ($S_1$ à $S_3$) et une source de courant constant ($G_2$);
le circuit comparateur ($K_0$ à $K_4$) délivre, à l'instant du ($t_0$) du début de la croissance progressive de la tension d'anesthésie, un signal au dispositif interrupteur ($S_1$ à $S_3$) le faisant passer dans l'état conducteur EN et, à l'instant ($t_1$) de la fin de la croissance progressive de la tension d'anesthésie, un signal faisant passer le dispositif interrupteur ($S_1$ à $S_3$) dans l'état HORS;
et la tension de charge du condensateur ($C_t$) est appliquée à un circuit de commande de déphasage (204), sous forme d'un signal de commande de phase.

9. Dispositif selon revendication 8, caractérisé en ce que
le dispositif comparateur comporte plusieurs comparateurs ($K_0$ à $K_4$), dont les seuils de réponse sont affectés chacun à un instant de début des diverses phases ($t_0$ à $t_5$) d'un profil de tension d'anesthésie (figure 4);
le dispositif interrupteur comporte un premier interrupteur ($S_1$), branchant et coupant la charge du condensateur ($C_t$), un deuxième interrupteur, reliant le condensateur ($C_t$) à une source de courant de décharge ($G_3$), et un troisième interrupteur ($S_3$), court-circuitant la charge du condensateur ($C_t$);
et les interrupteurs ($S_1$ à $S_3$) sont attaqués par les sorties des divers comparateurs ($K_0$ à $K_4$), par l'intermédiaire d'un premier circuit d'attaque ($D_0$ à $D_4$, $O_3$, $FF_1$, $FF_2$, $FF_3$) de façon que le premier interrupteur ($S_1$) passe dans l'état EN pendant la première et la troisième phase d'anesthésie ($t_0$ à $t_1$ ou $t_2$ à $t_3$), et dans l'état HORS pendant la seconde et la quatrième phase d'anesthésie ($t_1$ à $t_2$ ou $t_3$ à $t_4$), le second interrupteur ($S_2$) passe dans l'état EN pendant la dernière phase d'anesthésie ($t_4$ à $t_5$), et le troisième interrupteur ($S_3$) passe dans l'état EN en l'absence d'un signal d'autorisation d'anesthésie.

10. Dispositif d'électroanesthésie d'animaux de boucherie selon une des revendications 8 ou 9, caractérisé par un circuit (212) de mesure de la résistance ($R_T$) se trouvant entre les électrodes d'anesthésie (8).

11. Dispositif selon une quelconque des revendications 8 à 10, dans lequel les animaux de boucherie sont mis en contact par un convoyeur avec une paire d'électrodes d'anesthésie pénétrant sur le trajet du convoyeur et pivotant autour d'un axe perpendiculaire au sens de transport, et les électrodes d'anesthésie pivotent d'une position initiale à une position d'angle limite pendant leur contact avec l'animal de boucherie transporté, ledit dispositif étant caractérisé en ce que les électrodes d'anesthésie (8) actionnent un interrupteur d'angle minimal (ES$_1$) quand leur pivotement atteint un angle minimal et un interrupteur d'angle limite (ES$_2$) quand elles atteignent un angle limite donné; et un signal »résistance correcte« délivré par un circuit comparateur (K$_G$, K$_A$) apparaît à la sortie d'un circuit logique (A$_3$) uniquement quand l'interrupteur d'angle minimal (ES$_1$) et l'interrupteur d'angle limite (ES$_2$) signalent que l'angle minimal est atteint, mais non l'angle limite.

12. Dispositif selon une des revendication 10 ou 11, caractérisé en ce que la résistance mesurée par le circuit (212) est introduite dans une mémoire (S); et la valeur mémorisée est transmise au dispositif de commande (202) pour influencer la variation de la tension d'anesthésie (figure 4).

13. Dispositif selon revendication 12, caractérisé en ce que la mémoire comporte plusieurs bornes de commande de lecture (I$_0$, I$_2$), dont une (I$_0$) est reliée au signal d'autorisation d'anesthésie et l'autre (I$_2$) ou les autres sont reliées à une ou plusieurs sorties des comparateurs (K$_0$ à K$_4$), la mémoire (S) stockant la valeur de résistance mesurée au début de l'autorisation d'anesthésie et au début de la ou des phases d'anesthésie correspondant au comparateur considéré (K$_0$ à K$_4$).

14. Dispositif selon une quelconque des revendications 10 à 13, caractérisé en ce que le secondaire d'un transformateur de modulation (MT) et le primaire d'un transformateur de démodulation (DT) sont insérés dans la ligne reliant le générateur aux électrodes d'anesthésie (8);
le primaire du transformateur de modulation (MT) est relié à un modulateur délivrant le signal de mesure en tension alternative et le secondaire du transformateur de démodulation (DT) est relié avec un démodulateur filtrant la tension alternative de mesure;
et le signal délivré par le démodulateur est appliqué au dispositif de commande (202) sous forme d'un signal de résistance.

FIG. 2

FIG. 1

FIG. 3

FIG. 4

FIG. 5

FIG. 6